# EUROPEAN PATENT SPECIFICATION

(11) **EP 4 706 143 B1**
(45) Date of publication and mention of the grant of the patent: **23.09.2026**
(21) Application number: 24730671.5
(22) Date of filing: 30.05.2024
(51) Int. Cl.: B60L 53/12, B60L 53/62, B60L 53/30, B60L 53/36, B60L 53/38, B60L 53/63, B60L 53/65, B60L 53/66, H02J 50/12, H02J 50/80, B60L 53/122, B60L 53/126

(54) **DISTRIBUTED VARIABLE IMPEDANCE BALANCER CONTROL**
VERTEILTE AUSGLEICHSTEUERUNG MIT VARIABLER IMPEDANZ
COMMANDE D'ÉQUILIBREUR À IMPÉDANCE VARIABLE DISTRIBUÉE

(30) Priority: 30.05.2023 EP 23176229; 09.11.2023 GB 202317194
(43) Date of publication of application: 11.03.2026
(73) Proprietor: Enertechnos Limited, Kingston Upon Thames, Surrey KT1 3GZ (GB)
(72) Inventor: HAJILOO, Ashkan, London, Greater London W5 5RA (GB)
(74) Representative: Schlich
(86) International application number: PCT/EP2024/064946
(87) International publication number: WO 2024/246228

(56) References cited:
- WO-A1-2021/094783
- WO-A2-2022/074260
- US-A- 4 204 129
- US-A1- 2020 287 413
- YANG YANG ET AL: "Capacitive Transfer Cable and Its Performance in Comparison with Conventional Solid Insulated Cable", IEEE CONFERENCE, 16 June 2019 (2019-06-16) - 19 June 2019 (2019-06-19), pages 254 - 257, XP002801883, [retrieved on 20200326], DOI: 10.1109/EIC43217.2019.9046580

## Description

### Introduction

The present invention relates to power transmission systems comprising capacitive transmission lines, such as capacitive power transmission cables which are hereinafter referred to as "capacitive cables", to capacitive transmission lines and impedance management systems for use in such power transmission systems, and to methods of controlling such systems. In particular, the invention relates to a power transmission system that can handle varying loads, to a capacitive transmission line and an impedance management system for use in such a power transmission system, and to a method of controlling the impedance of a capacitive transmission line in a power transmission system.

### Background

US 4,204,129 describes, according to its abstract, "the transmission of electric power and in particular... an electric power-transmission system having reduced vector regulation, voltage drop, and power loss through the inclusion of capacitance in the cable in series between the generator and load by utilizing electric conductors, i.e., connective links, having capacitance distributed along the length of the cable".

Capacitive transmission lines, in the form of capacitive cables, for transmitting power between a power source and a load are known in the art and are described in, for example, WO 2010/026380, WO 2019/234449, WO 2021/094783, WO 2021/094782, WO 2020/120932, EP 23175297.3, and WO 2024/110610. Capacitive cables are also described in Yang Yang et al. "Capacitive Transfer Cable and Its Performance in Comparison with Conventional Solid Insulated Cable", 2019 IEEE Electrical Insulation Conference, DOI: 10.1109/EIC43217.2019.9046580.

Capacitive transmission lines, such as capacitive cables, are known to be advantageous in certain situations because these can exhibit lower voltage losses when power is transmitted along their lengths than conventional power transmission lines, which means capacitive transmission lines can be used to improve the efficiency of power transmission systems. This advantage is possible because capacitive transmission lines can exhibit much lower reactance than conventional transmission lines.

In WO 2022/074260, there is described a power-transmission cable protection and control arrangement for a capacitive transmission line in the form of a capacitive cable and a related connection and protection device, as well as a power supply network comprising two or more conductors capable of transmitting power between first and second nodes in a first mode being via a galvanic connection, i.e. as a conventional cable, or in a second mode as a capacitive cable. In the power supply network, there is a control system capable of switching the two or more conductors between the first and second modes. Thus, WO 2022/074260 describes a capacitive cable that can be switched from acting as a capacitive cable to acting as a conventional cable to protect the cable components from, for example, excessively high voltages that arise when the cable is in use, transmitting power.

Whilst the protection arrangement disclosed in WO 2022/074260 can successfully prevent the cable / transmission line components from being damaged when excessively high voltages arise, a problem with this arrangement newly identified by the present inventors is that the switch is binary and between a capacitive mode and a conventional mode. In this context, "capacitive mode" is intended to mean a mode of operation of the cable wherein the cable transmits power as a capacitive cable, whilst "conventional mode" is intended to mean a mode of operation of the cable wherein the cable transmits power as a conventional cable. Switching from capacitive mode to conventional mode may be necessary to protect the cable components when the excessive voltages are very high, but causes loss of the benefits of using the cable as a capacitive cable rather than as a conventional cable. Thus, the present inventors have newly identified that, in cases where only a slightly excessively high voltage arises, it is desirable to protect the cable components without switching from operation as a capacitive cable to operation as a conventional cable, in order to maintain the advantages of using a capacitive cable, i.e. using a cable in capacitive mode, whilst simultaneously protecting the cable components from the excessively high voltage.

Power transmission systems traditionally use a conventional transmission line, such as a conventional cable, to transmit power between a power source and a load. It is known that, in such systems, impedance arises along the length of the transmission line when the transmission line is in use, transmitting power. This impedance affects the efficiency of power transmission along the length of the transmission line. It will be appreciated that the impedance required for optimal power transmission may differ for different loads, e.g. loads that draw different amounts of power from the power source. Conventionally, the load to which power is supplied by the transmission line does not change, and thus the transmission line can be constructed to have optimal impedance for that load and the impedance does not thereafter need to be monitored or adjusted. However, in some prior art systems, it is possible to change the load. For example, a conventional wireless electric vehicle charging system comprises a power source connected to a converter, which converts an approximately 50 Hz or 60 Hz alternating current input from the power source to an approximately 70-95 kHz output, which is in turn connected to a ground pad. In this system, the converter supplies alternating current at a high frequency, e.g. about 85 kHz, to the ground pad, which then wirelessly transmits power to a car pad in an electric vehicle parked at or near the ground pad. It will be appreciated that, in this system, the electric vehicle parked at or near the ground pad may change.

It is therefore desirable to provide alternative, and preferably improved, circuits for power transmission systems wherein a power source is connected to one or more load(s) by a transmission line, such as a cable.

US 2020/0287413 describes, according to its abstract, a "Capacitive Power Transfer (CPT) system" which "includes a primary side for wirelessly transmitting power to a secondary side via coupling plates having mutual capacitance".

A problem with prior art capacitive transmission lines, such as capacitive cables, is that current is not typically distributed evenly between conductors connected to the power source and conductors connected to the load when the transmission line is in use, transmitting power. Specifically, at the end of the transmission line where conductors are connected to the power source, the conductors connected to the power source typically carry a much greater proportion of the current than the conductors connected to the load. Conversely, at the end of the transmission line where conductors are connected to the load, the conductors connected to the load typically carry a much greater proportion of the current than the conductors connected to the power source. There is typically a more even distribution of current between the conductors in middle portions of the capacitive transmission line. Thus, in prior art capacitive transmission lines, the conductors connected to the power source typically become very hot at the end of the transmission line where conductors are connected to the power source, and the conductors connected to the load typically become very hot at the end of the transmission line where conductors are connected to the load; this heating is typically caused by the relatively high amounts of current flowing in these parts of the conductors and can cause the ends of the transmission line to become hazardous to people and/or animals in close proximity thereto. This heating may additionally damage one or more components of the transmission line, such as by causing the dielectric material to melt. Thus, it is desirable to provide capacitive transmission lines which can operate as capacitive transmission lines without ends of the transmission line becoming excessively hot, i.e. overheating, when the transmission line is in use, transmitting power.

It also is desirable in general to provide alternative, and preferably improved, power transmission systems, as well as capacitive transmission lines and other components therefor.

### Summary of the Invention

The present invention is defined by the independent claims. Preferred embodiments of the invention are subject matter of the dependent claims. Accordingly, the invention provides a power transmission system having an impedance management system for modifying an impedance of a capacitive transmission line thereof. The invention also provides a capacitive transmission line and an impedance management system for use in such a power transmission system, and a method of controlling the impedance of a capacitive transmission line in such a power transmission system.

An advantage of the power transmission system of the invention is that the impedance of a load connected to the capacitive transmission line can be monitored and the impedance of the capacitive transmission line can be modified in accordance with the load. This can ensure that the impedance may be optimised for a particular load, such as by maximising the efficiency of power transmission using the system.

A second advantage of the power transmission system of the invention is that a change in the load connected to the capacitive transmission line can be anticipated and the impedance of the capacitive transmission line can be modified in accordance with the anticipated change in load. This can ensure that the impedance may be optimised for a particular load and that the time during which a load is drawing power from the system at a sub-optimal impedance may be minimised, which may, for example, maximise the efficiency of power transmission using the system.

A third advantage of the power transmission system of the invention is that a plurality of loads can be monitored simultaneously and impedance of the capacitive transmission line continuously or regularly modified in response to changes in the loads and/or in anticipation of changes to those loads. Additionally, the impedance at each load may be modified independently of the impedance at the other loads. Being able to monitor the loads simultaneously and constantly or regularly modifying the impedance of the capacitive transmission line in this manner can be advantageous because this can ensure the impedance is maintained at or near the optimum, which may, for example, maximise the efficiency of the system.

The power transmission system of the invention can be particularly advantageous in embodiments wherein the power transmission system is a wireless electric vehicle charging system. This is because monitoring each load can allow an operator of the wireless electric vehicle charging system to direct an electric vehicle to a ground pad at which the impedance has been modified in accordance with the optimal impedance required by that electric vehicle, which may, for example, maximise the efficiency of the system.

The power transmission system of the invention can also be advantageous because the capacitive transmission line may not need to be changed for a different capacitive transmission line having a different impedance every time the load, and thus the optimal impedance, is changed.

Another advantage of the power transmission system of the invention is that, when slightly excessively high voltages arise, the impedance management system can modify the impedance of the capacitive transmission line to protect its components from the excessive voltage, whilst avoiding the need to switch the transmission line to operating as a conventional transmission line and thus maintaining the advantages of using a capacitive transmission line in the power transmission system instead of a conventional transmission line.

A further advantage of the power transmission system of the invention is that the impedance management system can be used to filter out one or more specific order(s) of harmonic frequencies to reduce errant harmonics.

Another advantage of the power transmission system of the invention is that the impedance management system can be used to prevent the capacitive transmission line from overheating when in use, transmitting power.

An advantage of the capacitive transmission line of the invention is that the capacitive transmission line may be equipped with one or more electrical connection(s) enabling impedance to be modified along its length, as well as enabling impedance to be modified differently at different points along the transmission line.

An advantage of the impedance management system of the invention is that the impedance management system may be suitable for controlling/modifying the impedance of a capacitive transmission line in a power transmission system, thus helping to achieve the above-mentioned advantages of the power transmission system of the invention.

An advantage of using the capacitive transmission line of the invention in a power transmission system is that the capacitive transmission line may be equipped with one or more electrical connection(s) enabling impedance to be modified along its length in use, as well as enabling impedance to be modified differently at different points along the transmission line when in use.

An advantage of using the impedance management system of the invention in a power transmission system is that the impedance management system can be used to control/modify the impedance of a capacitive transmission line in the power transmission system, thus helping to achieve the above-mentioned advantages of the power transmission system of the invention.

An advantage of the method of the invention is that the impedance of a capacitive transmission line of a power transmission system may be controlled, which may, for example, maximise the efficiency of the system.

### Detailed Description of the Invention

According to a first aspect of the invention, there is provided a power transmission system, comprising:
(a) a power source,
(b) one or more load(s), and
(c) a capacitive transmission line having:
   (i) a first conductor connected to the power source but not to the one or more load(s),
   (ii) a second conductor connected to the one or more load(s) but not to the power source, and
   (iii) a dielectric material between the first conductor and the second conductor,
characterised in that the power transmission system comprises:
(d) an impedance management system for modifying an impedance of the capacitive transmission line by switching the impedance between at least two states, wherein in a first state the capacitive transmission line has a first impedance and functions as a capacitive transmission line, and wherein in a second state the capacitive transmission line has a second impedance, different to the first impedance, and functions as a capacitive transmission line.

As used herein, the term "power source" is intended to mean an electrical component capable of suppling power. The power source does not need to be active, i.e. supplying power, to be considered a "power source".

As used herein, the term "load" is intended to mean an electrical component that may draw power from the power source. The load does not need to be active, i.e. drawing power, to be considered a "load". An example of a load is a ground pad of a wireless electric vehicle charging system, which may be active, i.e. drawing power from the power supply when an electric vehicle is parked at the ground pad, but may also be inactive, i.e. not drawing power from the power supply when no electric vehicle is parked at the ground pad.

As used herein, the term "transmission line" is intended to mean an electrical component for transmitting power from a first node in an electrical circuit, such as a power source, to a second node in the electrical circuit, such as a load. As used herein, the term "capacitive transmission line" is intended to mean a transmission line for transmitting power via a capacitive coupling, i.e. via a dielectric material between two distinct conductors. Examples of capacitive transmission lines include capacitive cables, capacitive conductors, capacitive windings, and capacitive traces on printed circuit boards. In the invention, preferably the capacitive transmission line is a capacitive cable.

It will be appreciated that a power transmission system having a load, like all electrical circuits having a load, necessarily includes a signal line adapted/configured to transmit, or for transmitting, power from a power source to the load and a return line adapted/configured to transmit/return, or for transmitting/returning, power from the load to the power source to complete the electrical circuit. Thus, in the power transmission system of the invention, the capacitive transmission line may be used as either the signal line or the return line. The other line, i.e signal or return, may similarly comprise a capacitive transmission line but may alternatively comprise a conventional transmission line. Preferably, the transmission line is used as the signal line.

The power transmission system comprises an impedance management system for modifying an impedance of the capacitive transmission line. In this context, modification of the impedance of the capacitive transmission line is intended to mean changing the impedance whilst keeping the transmission line in a capacitive mode, i.e. without switching the transmission line from a capacitive mode to a conventional mode or vice versa.

Thus, including an impedance management system can be advantageous because this can facilitate modification of the impedance of the capacitive transmission line without switching the capacitive transmission line to functioning as a conventional transmission line, unlike the protection arrangement disclosed in WO 2022/074260. This can mean the advantages of using a capacitive transmission line in a power transmission system may be maintained, whilst protecting the transmission line from damage when, for example, excessively high voltages arise.

The impedance management system may be adapted/configured to modify, or for modifying, the impedance of the capacitive transmission line by switching the impedance between at least three states, wherein in each state the capacitive transmission line has an impedance different to the impedance of each of the other two states and functions as a capacitive transmission line. Preferably, the impedance management system is adapted/configured to modify, or for modifying, the impedance of the capacitive transmission line by switching the impedance between at least five states, wherein in each state the capacitive transmission line has an impedance different to the impedance of each of the other four states and functions as a capacitive transmission line. More preferably, the impedance management system is adapted/configured to modify, or for modifying, the impedance of the capacitive transmission line by switching the impedance between at least ten states, wherein in each state the capacitive transmission line has an impedance different to the impedance of each of the other nine states and functions as a capacitive transmission line. Even more preferably, the impedance management system is adapted/configured to modify, or for modifying, the impedance of the capacitive transmission line by switching the impedance between at least twenty states, wherein in each state the capacitive transmission line has an impedance different to the impedance of each of the other nineteen states and functions as a capacitive transmission line. The impedance management system may be adapted/configured to modify, or for modifying, the impedance of the capacitive transmission line by switching the impedance between an infinite number of states between a maximum impedance and a minimum impedance, wherein in each state the capacitive transmission line has an impedance different to the impedance of each of the other states and functions as a capacitive transmission line. Modifying the impedance by switching the impedance between a greater number of states can be advantageous because this can facilitate finer tuning of the impedance and thus can increase the likelihood of the impedance approximating or reaching an optimum impedance / a target impedance.

The impedance management system may be adapted/configured to modify, or for modifying, the impedance of the capacitive transmission line over a range of impedances / an impedance scale. The impedance management system may not act as a binary switch that switches the transmission line between a capacitive mode and a conventional mode. Instead, the impedance management system is for modifying the impedance of the capacitive transmission line by switching the impedance to one of at least two possible impedances whilst maintaining/keeping the capacitive transmission line functioning as a capacitive transmission line. It will be appreciated that the two impedances are distinct from each other, i.e. not the same. There are at least two possible impedances. Preferably, there are at least three possible impedances. More preferably, there are at least five possible impedances. Even more preferably, there are at least ten possible impedances. Yet even more preferably, there are at least twenty possible impedances. There may be an infinite number of impedances between a maximum impedance and a minimum impedance. Using a greater number of impedances can be advantageous because this can facilitate finer tuning of the impedance and thus can increase the likelihood of the impedance approximating or reaching an optimum impedance / a target impedance.

By operating over a range of impedances / an impedance scale and/or by modifying the impedance by switching the impedance between a plurality of states, including the impedance management system can be advantageous because this can facilitate protection of the transmission line components when a slightly excessively high voltage is experienced without switching the transmission line to operating as a conventional transmission line, rather than as a capacitive transmission line. This can mean the advantages of operating as a capacitive transmission line are not lost whilst successfully protecting the transmission line components from the excessive voltage.

Since the impedance management system may manage/modify impedance over a range of impedances and/or by switching the impedance between a plurality of states, the impedance management system can be described as an "impedance tuning system".

It will be appreciated that managing/modifying the impedance of the capacitive transmission line as described above not only modifies the impedance of the capacitive transmission line, but also the impedance of the electrical circuit which the capacitive transmission line forms part of. Thus, the impedance management system may be adapted/configured to modify, or for modifying, an impedance of the power transmission system as a whole.

The power transmission system may be adapted/configured to transmit, or for transmitting, power in a single-phase manner, a three-phase manner, a six-phase manner, or a nine-phase manner. Alternatively, more than nine phases may be used. Preferably, the power transmission system is adapted/configured to transmit, or for transmitting, power in a single-phase manner or a three-phase manner.

The one or more load(s) may be a plurality of loads. There may be at least two loads, at least three loads, at least five loads, at least ten loads, at least twenty loads, at least thirty loads, or at least fifty loads. In an example described in more detail below, there are ten loads or potential loads, in the form of ten wireless charging locations for electric vehicles. The invention allows modification of the charging system in accordance with changing loads due to changing occupancy and use of these locations.

The impedance management system may comprise (i) a receiver adapted/configured to receive, or for receiving, data about the one or more load(s), about one or more load(s) present at the one or more load(s), and/or about the power transmission system / electrical circuit, (ii) a processor adapted/configured to determine, or for determining, a target impedance of the capacitive transmission line based on the data, and (iii) a controller adapted/configured to modify, or for modifying, the impedance of the capacitive transmission line in accordance with the target impedance. The receiver may receive data via wireless communications or via wired communications. Including a receiver can be advantageous because this may enable the impedance management system to be continuously or regularly updated regarding the status of the one or more load(s), the one or more load(s) present at the one or more load(s), and/or the power transmission system / electrical circuit, and thus an actual or anticipated change therein. Including a processor can be advantageous because this may enable the impedance management system to integrate the data received by the receiver, thereby enabling the impedance management system to determine how, if at all, the impedance needs to be modified to be optimal. Including a controller can be advantageous because this may enable the impedance to be modified as required to approximate or reach the target impedance.

The target impedance may be the impedance required to optimise the system. For example, the target impedance may be an impedance required to maximise the efficiency of the system (e.g. to maximise the efficiency of power transmission using the system), an impedance required to minimise risks associated with a fault in the system, an impedance required to filter out / substantially eliminate a specific order of harmonic frequencies, and/or an impedance required to maintain an amount of current/power delivered/transmitted to a particular load at a particular value.

Preferably, the controller is adapted/configured to modify, or for modifying, the impedance of the capacitive transmission line to decrease a difference between the impedance of the capacitive transmission line and the target impedance. More preferably, the controller is adapted/configured to modify, or for modifying, the impedance of the capacitive transmission line to substantially eliminate a difference between the impedance of the capacitive transmission line and the target impedance, i.e. to set the impedance of the capacitive transmission line at least substantially equal, or exactly equal, to the target impedance.

The data about the one or more load(s) or about one or more load(s) present at the one or more load(s) may be data about an impedance state of each load. Alternatively or additionally, the data about the one or more load(s) or about one or more load(s) present at the one or more load(s) may be data about the current and/or the voltage at each load. This can be advantageous because providing the impedance management system with data about the impedance state of each load and/or the current and/or the voltage at each load may enable the processor to determine changes in impedance that may be needed to achieve the target impedance.

The data about the power transmission system / electrical circuit may be data about an impedance of the power transmission system / electrical circuit as a whole or about an impedance of a particular component of the power transmission system / electrical circuit. This can be advantageous because providing the impedance management system with data about such an impedance may enable the processor to determine changes in impedance that may be needed to achieve the target impedance.

The impedance management system may modify, or may be adapted/configured to modify or may be for modifying, an overall impedance of the capacitive transmission line or one or more local impedance(s) at one or more point(s) along the capacitive transmission line. Modifying the overall impedance of the capacitive transmission line can be advantageous because this may enable large-scale changes in impedance across the whole system, which may be faster than modifying the impedance at lots of individual points along the length of the transmission line. Modifying one or more local impedance(s) at one or more point(s) along the capacitive transmission line can be advantageous because this may enable fine tuning of the impedance at specific points, as well as enabling different impedances at different points along the length of the transmission line, which can be advantageous if there are different loads connected to the transmission line and thus different impedances are required; this differentiation may not be possible by modifying the overall impedance only. Thus, preferably the impedance management system may modify, or may be adapted/configured to modify or may be for modifying, both an overall impedance of the capacitive transmission line and one or more local impedance(s) at one or more point(s) along the capacitive transmission line. Such embodiments can be advantageous as they may allow for both large-scale, fast changes in impedance, as well as fine tuning of impedance at specific points, where required.

The one or more point(s) along the capacitive transmission line may be associated with the one or more load(s). For example, the one or more point(s) along the capacitive transmission line may be one or more points(s) at which the one or more load(s) is/are connected to the second conductor of the capacitive transmission line. Such embodiments can be advantageous as these may allow the impedance at each load to be readily modified.

The impedance management system may be adapted/configured to modify, or may be for modifying, the impedance of the capacitive transmission line in response to a change in one or more variables. Examples of such variables include the frequency of alternating current supplied by the power source, the number and power rating of each load connected to the second conductor, the length of the capacitive transmission line, the number of turns in the capacitive transmission line, the difference between the signal line's impedance to current flow and the return line's impedance to current flow, the position along the second conductor at which each load is connected thereto, the presence in the vicinity of the capacitive transmission line of conductive/reactive elements that affect its passive, i.e. resistive and/or inductive, electromagnetic properties, the position of the power source relative to the position of the one or more load(s), and the amount of power required by each load. In essence, the impedance management system may be adapted/configured to modify, or may be for modifying, the impedance of the capacitive transmission line in response to any change in any variable that causes a change in reactance and/or resistance, and thus impedance, of the capacitive transmission line and/or the power transmission system / electrical circuit that the capacitive transmission line forms part of.

The impedance management system may modify, or may be adapted/configured to modify or may be for modifying, the impedance of the capacitive transmission line in response to a change in the one or more load(s). This can be advantageous because this may allow the impedance to be modified to optimise power transmission to the load(s), such as by maximising the efficiency of power transmission to the load(s). This can also be advantageous because modifying the impedance of the capacitive transmission line / power transmission system in response to a change in the one or more load(s) may mean the capacitive transmission line does not need to be replaced by a different capacitive transmission line having a different impedance every time the load is changed; instead, the same capacitive transmission line can be used with different impedance, which can be easier and cheaper to manage.

Alternatively or additionally, the impedance management system may modify, or may be adapted/configured to modify or may be for modifying, the impedance of the capacitive transmission line in anticipation of a change in the one or more load(s). In this context, "anticipation" of a change in the one or more load(s) may be caused by, for example, a scheduled change in the one or more load(s) being reported to the controller, an analysis of the state(s) of each load and thus determination of how the state(s) may be expected to change over time. Such embodiments can be advantageous because these may enable the impedance at each load to be modified before the load is changed. This can mean that, once the change has occurred, the impedance may be at or near optimal straight away, rather than time then being taken to reach the optimum. This can be advantageous because it may reduce the amount of time during which the power transmission system is operating in a sub-optimal manner, which can, for example, increase the overall efficiency of the power transmission system.

The impedance management system may be adapted/configured to modify, or for modifying, the impedance of the capacitive transmission line by modifying one or more of a capacitive reactance of the capacitive transmission line, an inductive reactance of the capacitive transmission line, a resistance of the capacitive transmission line, and a frequency of alternating current supplied by the power source. This can be advantageous because it may allow the operator of the power transmission system to select which electrical parameter is easiest to modify based on the particular application for which the power transmission system is employed and thus modify that parameter accordingly. The impedance management system may be adapted/configured to modify, or for modifying, the impedance of the capacitive transmission line by modifying the capacitive reactance of the capacitive transmission line, the inductive reactance of the capacitive transmission line, or both. The impedance management system may be adapted/configured to modify, or for modifying, the impedance of the capacitive transmission line by modifying the capacitive reactance of the capacitive transmission line, the inductive reactance of the capacitive transmission line, and/or the resistance of the capacitive transmission line. Such embodiments can be advantageous because capacitive reactance, inductive reactance, and resistance are typically more convenient for an operator of the power transmission system to modify than the frequency of alternating current supplied by the power source.

The capacitive transmission line may comprise one or more electrical connection(s) each of which is between the first conductor and the second conductor or in series with the first conductor or the second conductor, and each of which is configured to be individually controlled. This individual control can be advantageous because it may allow for fine tuning of the impedance at specific points along the length of the capacitive transmission line. Having a plurality of such electrical connections can also be advantageous because this may provide more than one way of modifying the impedance, which may be useful if modifying one of the other connections is not practicable or desirable.

The one or more electrical connection(s) may be a plurality of electrical connections. There may be at least two electrical connections, at least three electrical connections, at least five electrical connections, at least ten electrical connections, at least twenty electrical connections, at least thirty electrical connections, or at least fifty electrical connections. The invention allows modification of the electrical connections in accordance with changing load(s).

The one or more electrical connection(s) may each have variable capacitance, variable inductance, and/or variable resistance. This can be advantageous because it may allow the operator of the power transmission system to select which electrical parameter is easiest to modify based on the particular application for which the power transmission system is employed and thus modify that parameter accordingly. The one or more electrical connection(s) may each have variable capacitance, variable inductance, or both.

The one or more electrical connection(s) may be selected from the group consisting of one or more capacitor(s), one or more inductor(s), one or more resistor(s), and a combination thereof. Using such components can be advantageous because the capacitor(s) may be used to readily modify the capacitive reactance, whilst the inductor(s) may be used to readily modify the inductive reactance and the resistor(s) may be used to readily modify the resistance. These components are also relatively simple, and thus cheap, electrical components to acquire and use, which can be advantageous. The one or more electrical connection(s) may be selected from the group consisting of one or more capacitor(s), one or more inductor(s), and a combination thereof. Including resistors, rather than only capacitors and/or inductors, can be advantageous because the resistors may allow resistance to be modified in addition to, or instead of, reactance, which provides an operator of the system with a greater degree of control and thus more options for modifying the impedance.

The one or more electrical connection(s) may each be individually controlled/controllable via a switch. This can be advantageous because switches may be easy to control and may be easy to repair when broken.

Each of the one or more electrical connection(s) may comprise one capacitor, one inductor, or one resistor which is individually controlled/controllable via a switch. This individual control can be advantageous because having one electrical component controlled by one switch may allow for fine tuning of the impedance at specific points along the length of the transmission line. Each of the one or more electrical connection(s) may comprise a plurality of capacitors, a plurality of inductors, a plurality of resistors, or a plurality of electrical components each of which is a capacitor, an inductor, or a resistor, which are collectively controlled/controllable via a switch. This collective control can be advantageous because having more than one electrical component controlled by one switch may allow for large scale changes to be made to the impedance at specific points along the length of the transmission line relatively quickly and easily. The one or more electrical connection(s) may comprise a combination of individually controlled/controllable components and collectively controlled/controllable components, which can allow the advantages of both of these types of connection to be achieved in the same power transmission system.

Preferably, each of the one or more electrical connection(s) between the first conductor and the second conductor has variable capacitance, i.e. not variable inductance and/or variable resistance. This can be advantageous because this may prevent a short circuit forming between the first conductor and the second conductor when the electrical connection is active. However, each of the one or more electrical connection(s) in series with the first conductor or the second conductor may have variable capacitance, variable inductance, and/or variable resistance.

The capacitive transmission line may comprise/have a plurality of first conductors connected to the power source but not to the one or more load(s) and/or a plurality of second conductors connected to the one or more load(s) but not to the power source.

In such embodiments, the one or more electrical connection(s) may be between one or more of the first conductors and one or more of the second conductors. For example, the one or more electrical connection(s) may be between some of the first conductors and some of the second conductors, between some of the first conductors and all of the second conductors, between all of the first conductors and some of the second conductors, or between all of the first conductors and all of the second conductors. This can be advantageous because this may facilitate modification of the impedance of either the first conductors or the second conductors to a greater extent than the other.

The power transmission system may comprise a detector adapted/configured to detect, or for detecting, a fault with the capacitive transmission line or another component of the power transmission system. The detector may be adapted/configured to direct/instruct, or for directing/instructing, the impedance management system to modify, e.g. increase, the impedance of the capacitive transmission line in response to detection of a fault. This can be advantageous because this may prevent the transmission line from being damaged when a fault occurs. An example of such a fault with a capacitive transmission line may be an outer sheath of a capacitive cable being broken such that the first conductor and/or the second conductor is positioned in direct electrical contact with an external object not forming part of the power transmission system.

The impedance management system may be adapted/configured to control/modify, or for controlling/modifying, an amount of current to be supplied to each load. The impedance management system may therefore be adapted/configured to control/modify, or for controlling/modifying, an amount of power to be supplied to each load. This can be advantageous because this may allow different loads with different current/power demands to be provided with different amounts of current/power as required.

The impedance management system may be adapted/configured to control/modify, or for controlling/modifying, a voltage between the first conductor and the second conductor. For example, the impedance management system may be adapted/configured to modify, or for modifying, an amount of capacitance between the first conductor and the second conductor; it will be appreciated that increasing the capacitance between the first and second conductors decreases the voltage therebetween. Reducing the voltage in this manner can be advantageous because this can reduce the risk of the dielectric material becoming damaged.

The impedance management system may be adapted/configured to modify, or for modifying, an amount of current flowing in each of the first conductor and the second conductor at any given time. Thus, the impedance management system may be adapted/configured to modify, or for modifying, a relative amount of current in each of the first conductor and the second conductor at any given time. For example, the impedance management system may be adapted/configured to maintain, or for maintaining, (i) an impedance of the first conductor which is higher than an impedance of the second conductor at an end of the transmission line where the first conductor is connected to the power source and/or (ii) an impedance of the first conductor which is lower than an impedance of the second conductor at an end of the transmission line where the second conductor is connected to a load. This can be advantageous because this may ensure current is distributed at least substantially equally between the first conductor and the second conductor along the length of the transmission line, preventing ends of the transmission line from overheating and thus reducing hazards and decreasing the likelihood of components of the transmission line becoming damaged when the transmission line is in use, transmitting power.

According to a second aspect of the invention, there is provided a capacitive transmission line for a power transmission system according to the first aspect of the invention, comprising:
(a) a first conductor for connection to a power source but not to one or more load(s),
(b) a second conductor for connection to the one or more load(s) but not to the power source,
(c) a dielectric material between the first conductor and the second conductor, and
(d) one or more electrical connection(s) each of which is between the first conductor and the second conductor or in series with the first conductor or the second conductor,
characterised in that each of the one or more electrical connection(s) is configured to be individually controlled, such that an impedance of the capacitive transmission line can be switched between at least two states, wherein in a first state the capacitive transmission line has a first impedance and functions as a capacitive transmission line, and wherein in a second state the capacitive transmission line has a second impedance, different to the first impedance, and functions as a capacitive transmission line.

The capacitive transmission line may be for transmitting power in a single-phase manner, a three-phase manner, a six-phase manner, or a nine-phase manner. Alternatively, more than nine phases may be used. Preferably, the capacitive transmission line is for transmitting power in a single-phase manner or a three-phase manner.

The one or more electrical connection(s) may be a plurality of electrical connections. There may be at least two electrical connections, at least three electrical connections, at least five electrical connections, at least ten electrical connections, at least twenty electrical connections, at least thirty electrical connections, or at least fifty electrical connections. In an example described in more detail below, there are three electrical connections. The invention allows modification of the electrical connections in accordance with changing load(s).

The one or more electrical connection(s) may each have variable capacitance, variable inductance, and/or variable resistance. This can be advantageous because it may allow the operator of the power transmission system to select which electrical parameter is easiest to modify based on the particular application for which the power transmission system is employed and thus modify that parameter accordingly. The one or more electrical connection(s) may each have variable capacitance, variable inductance, or both.

The one or more electrical connection(s) may be selected from the group consisting of one or more capacitor(s), one or more inductor(s), one or more resistor(s), and a combination thereof. Using such components can be advantageous because the capacitor(s) may be used to readily modify the capacitive reactance, whilst the inductor(s) may be used to readily modify the inductive reactance and the resistor(s) may be used to readily modify the resistance. These components are also relatively simple, and thus cheap, electrical components to acquire and use, which can be advantageous. The one or more electrical connection(s) may be selected from the group consisting of one or more capacitor(s), one or more inductor(s), and a combination thereof. Including resistors, rather than only capacitors and/or inductors, can be advantageous because the resistors may allow resistance to be modified in addition to, or instead of, reactance, which provides an operator of the system with a greater degree of control and thus more options for modifying the impedance.

The one or more electrical connection(s) may each be individually controlled/controllable via a switch. This can be advantageous because switches may be easy to control and may be easy to repair when broken.

Each of the one or more electrical connection(s) may comprise one capacitor, one inductor, or one resistor which is individually controlled/controllable via a switch. This individual control can be advantageous because having one electrical component controlled by one switch may allow for fine tuning of the impedance at specific points along the length of the transmission line. Each of the one or more electrical connection(s) may comprise a plurality of capacitors, a plurality of inductors, a plurality of resistors, or a plurality of electrical components each of which is a capacitor, an inductor, or a resistor, which are collectively controlled/controllable via a switch. This collective control can be advantageous because having more than one electrical component controlled by one switch may allow for large scale changes to be made to the impedance at specific points along the length of the transmission line relatively quickly and easily. The one or more electrical connection(s) may comprise a combination of individually controlled/controllable components and collectively controlled/controllable components, which can allow the advantages of both of these types of connection to be achieved in the same power transmission system.

Preferably, each of the one or more electrical connection(s) between the first conductor and the second conductor has variable capacitance, i.e. not variable inductance and/or variable resistance. This can be advantageous because this may prevent a short circuit forming between the first conductor and the second conductor when the electrical connection is active. However, each of the one or more electrical connection(s) in series with the first conductor or the second conductor may have variable capacitance, variable inductance, and/or variable resistance.

Preferably, the capacitive transmission line is for use as a backbone of a power transmission system, such as a wireless electric vehicle charging system.

The capacitive transmission line may be a capacitive cable, a capacitive conductor, a capacitive winding, or a capacitive trace on a printed circuit board. Preferably, the capacitive transmission line is a capacitive cable.

It will be appreciated that the capacitive transmission line can be advantageous because it is suitable for use in a power transmission system according to the first aspect of the invention, and may thus be used to achieve the advantages of that system detailed above.

According to a third aspect of the invention, there is provided an impedance management system for a power transmission system according to the first aspect of the invention, comprising:
(a) a receiver for receiving data about one or more load(s) and/or about the power transmission system,
(b) a processor for determining a target impedance of a capacitive transmission line based on the data, and
(c) a controller for modifying an impedance of the capacitive transmission line in accordance with the target impedance,
characterised in that the controller is for modifying the impedance of the capacitive transmission line by switching the impedance between at least two states, wherein in a first state the capacitive transmission line has a first impedance and functions as a capacitive transmission line, and wherein in a second state the capacitive transmission line has a second impedance, different to the first impedance, and functions as a capacitive transmission line.

Thus, the impedance management system can be advantageous because this can facilitate modification of the impedance of the capacitive transmission line without switching the capacitive transmission line to functioning as a conventional transmission line, unlike the protection arrangement disclosed in WO 2022/074260. This can mean the advantages of using a capacitive transmission line in a power transmission system may be maintained, whilst protecting the transmission line from damage when, for example, excessively high voltages arise.

The controller may be adapted/configured to modify, or for modifying, the impedance of the capacitive transmission line by switching the impedance between at least three states, wherein in each state the capacitive transmission line has an impedance different to the impedance of each of the other two states and functions as a capacitive transmission line. Preferably, the controller is adapted/configured to modify, or for modifying, the impedance of the capacitive transmission line by switching the impedance between at least five states, wherein in each state the capacitive transmission line has an impedance different to the impedance of each of the other four states and functions as a capacitive transmission line. More preferably, the controller is adapted/configured to modify, or for modifying, the impedance of the capacitive transmission line by switching the impedance between at least ten states, wherein in each state the capacitive transmission line has an impedance different to the impedance of each of the other nine states and functions as a capacitive transmission line. Even more preferably, the controller is adapted/configured to modify, or for modifying, the impedance of the capacitive transmission line by switching the impedance between at least twenty states, wherein in each state the capacitive transmission line has an impedance different to the impedance of each of the other nineteen states and functions as a capacitive transmission line. The controller may be adapted/configured to modify, or for modifying, the impedance of the capacitive transmission line by switching the impedance between an infinite number of states between a maximum impedance and a minimum impedance, wherein in each state the capacitive transmission line has an impedance different to the impedance of each of the other states and functions as a capacitive transmission line. Modifying the impedance by switching the impedance between a greater number of states can be advantageous because this can facilitate finer tuning of the impedance and thus can increase the likelihood of the impedance approximating or reaching an optimum impedance / a target impedance.

The controller may be adapted/configured to modify, or for modifying, the impedance of the capacitive transmission line over a range of impedances / an impedance scale. The controller may not act as a binary switch that switches the transmission line between a capacitive mode and a conventional mode. Instead, the controller is for modifying the impedance of the capacitive transmission line by switching the impedance to one of at least two possible impedances whilst maintaining/keeping the capacitive transmission line functioning as a capacitive transmission line. It will be appreciated that the two impedances are distinct from each other, i.e. not the same. There are at least two possible impedances. Preferably, there are at least three possible impedances. More preferably, there are at least five possible impedances. Even more preferably, there are at least ten possible impedances. Yet even more preferably, there are at least twenty possible impedances. There may be an infinite number of impedances between a maximum impedance and a minimum impedance. Using a greater number of impedances can be advantageous because this can facilitate finer tuning of the impedance and thus can increase the likelihood of the impedance approximating or reaching an optimum impedance / a target impedance.

By operating over a range of impedances / an impedance scale and/or by modifying the impedance by switching the impedance between a plurality of states, the impedance management system can be advantageous because this can facilitate protection of the transmission line components when a slightly excessively high voltage is experienced without switching the transmission line to operating as a conventional transmission line, rather than as a capacitive transmission line. This can mean the advantages of operating as a capacitive transmission line are not lost whilst successfully protecting the transmission line components from the excessive voltage.

Since the impedance management system may manage/modify impedance over a range of impedances and/or by switching the impedance between a plurality of states, the impedance management system can be described as an "impedance tuning system".

It will be appreciated that managing/modifying the impedance of the capacitive transmission line as described above not only modifies the impedance of the capacitive transmission line, but also the impedance of the electrical circuit which the capacitive transmission line forms part of. Thus, the controller may be adapted/configured to modify, or for modifying, an impedance of the power transmission system as a whole.

The target impedance may be the impedance required to optimise the system. For example, the target impedance may be an impedance required to maximise the efficiency of the system (e.g. to maximise the efficiency of power transmission using the system), an impedance required to minimise risks associated with a fault in the system, an impedance required to filter out / substantially eliminate a specific order of harmonic frequencies, and/or an impedance required to maintain an amount of current/power delivered/transmitted to a particular load at a particular value.

Preferably, the controller is adapted/configured to modify, or for modifying, the impedance of the capacitive transmission line to decrease a difference between the impedance of the capacitive transmission line and the target impedance. More preferably, the controller is adapted/configured to modify, or for modifying, the impedance of the capacitive transmission line to substantially eliminate a difference between the impedance of the capacitive transmission line and the target impedance, i.e. to set the impedance of the capacitive transmission line at least substantially equal, or exactly equal, to the target impedance.

The one or more load(s) may be a plurality of loads. There may be at least two loads, at least three loads, at least five loads, at least ten loads, at least twenty loads, at least thirty loads, or at least fifty loads.

The data about the one or more load(s) may be data about an impedance state of each load. Alternatively or additionally, the data about the one or more load(s) may be data about the current and/or the voltage at each load. This can be advantageous because providing the impedance management system with data about the impedance state of each load and/or the current and/or the voltage at each load may enable the processor to determine changes in impedance that may be needed to achieve the target impedance.

The data about the power transmission system may be data about an impedance of the power transmission system as a whole or about an impedance of a particular component of the power transmission system. This can be advantageous because providing the impedance management system with data about such an impedance may enable the processor to determine changes in impedance that may be needed to achieve the target impedance.

The controller may be adapted/configured to modify, or may be for modifying, an overall impedance of the capacitive transmission line or one or more local impedance(s) at one or more point(s) along the capacitive transmission line. Modifying the overall impedance of the capacitive transmission line can be advantageous because this may enable large-scale changes in impedance across the whole system, which may be faster than modifying the impedance at lots of individual points along the length of the transmission line. Modifying one or more local impedance(s) at one or more point(s) along the capacitive transmission line can be advantageous because this may enable fine tuning of the impedance at specific points, as well as enabling different impedances at different points along the length of the transmission line, which can be advantageous if there are different loads connected to the transmission line and thus different impedances are required; this differentiation may not be possible by modifying the overall impedance only. Thus, preferably the controller may be adapted/configured to modify, or may be for modifying, both an overall impedance of the capacitive transmission line and one or more local impedance(s) at one or more point(s) along the capacitive transmission line. Such embodiments can be advantageous as they may allow for both large-scale, fast changes in impedance, as well as fine tuning of impedance at specific points, where required.

The one or more point(s) along the capacitive transmission line may be associated with the one or more load(s). For example, the one or more point(s) along the capacitive transmission line may be one or more points(s) at which the one or more load(s) is/are connected to a second conductor of the capacitive transmission line. Such embodiments can be advantageous as these may allow the impedance at each load to be readily modified.

The controller may be adapted/configured to modify, or may be for modifying, the impedance of the capacitive transmission line in response to a change in one or more variables. Examples of such variables include the frequency of alternating current supplied by a power source, the number and power rating of each load connected to the second conductor, the length of the capacitive transmission line, the number of turns in the capacitive transmission line, the difference between the signal line's impedance to current flow and the return line's impedance to current flow, the position along the second conductor at which each load is connected thereto, the presence in the vicinity of the capacitive transmission line of conductive/reactive elements that affect its passive, i.e. resistive and/or inductive, electromagnetic properties, the position of the power source relative to the position of the one or more load(s), and the amount of power required by each load. In essence, the controller may be adapted/configured to modify, or may be for modifying, the impedance of the capacitive transmission line in response to any change in any variable that causes a change in reactance and/or resistance, and thus impedance, of the capacitive transmission line and/or the power transmission system / electrical circuit that the capacitive transmission line forms part of.

The controller may be adapted/configured to modify or may be for modifying, the impedance of the capacitive transmission line in response to a change in the one or more load(s). This can be advantageous because this may allow the impedance to be modified to optimise power transmission to the load(s), such as by maximising the efficiency of power transmission to the load(s). This can also be advantageous because modifying the impedance of the capacitive transmission line / power transmission system in response to a change in the one or more load(s) may mean the capacitive transmission line does not need to be replaced by a different capacitive transmission line having a different impedance every time the load is changed; instead, the same capacitive transmission line can be used with different impedance, which can be easier and cheaper to manage.

Alternatively or additionally, the controller may be adapted/configured to modify or may be for modifying, the impedance of the capacitive transmission line in anticipation of a change in the one or more load(s). In this context, "anticipation" of a change in the one or more load(s) may be caused by, for example, a scheduled change in the one or more load(s) being reported to the controller, an analysis of the state(s) of each load and thus determination of how the state(s) may be expected to change over time. Such embodiments can be advantageous because these may enable the impedance at each load to be modified before the load is changed. This can mean that, once the change has occurred, the impedance may be at or near optimal straight away, rather than time then being taken to reach the optimum. This can be advantageous because it may reduce the amount of time during which the power transmission system is operating in a sub-optimal manner, which can, for example, increase the overall efficiency of the power transmission system.

The controller may be adapted/configured to modify, or for modifying, the impedance of the capacitive transmission line by modifying one or more of a capacitive reactance of the capacitive transmission line, an inductive reactance of the capacitive transmission line, a resistance of the capacitive transmission line, and a frequency of alternating current supplied by the power source. This can be advantageous because it may allow the operator of the power transmission system to select which electrical parameter is easiest to modify based on the particular application for which the power transmission system is employed and thus modify that parameter accordingly. The controller may be adapted/configured to modify, or for modifying, the impedance of the capacitive transmission line by modifying the capacitive reactance of the capacitive transmission line, the inductive reactance of the capacitive transmission line, or both. The controller may be adapted/configured to modify, or for modifying, the impedance of the capacitive transmission line by modifying the capacitive reactance of the capacitive transmission line, the inductive reactance of the capacitive transmission line, and/or the resistance of the capacitive transmission line. Such embodiments can be advantageous because capacitive reactance, inductive reactance, and resistance are typically more convenient for an operator of the power transmission system to modify than the frequency of alternating current supplied by the power source.

The controller may be adapted/configured to control/modify, or for controlling/modifying, an amount of current to be supplied to each load. The controller may therefore be adapted/configured to control/modify, or for controlling/modifying, an amount of power to be supplied to each load. This can be advantageous because this may allow different loads with different current/power demands to be provided with different amounts of current/power as required.

The controller may be adapted/configured to control/modify, or for controlling/modifying, a voltage between a first conductor of the capacitive transmission line and a second conductor of the capacitive transmission line. For example, the controller may be adapted/configured to modify, or for modifying, an amount of capacitance between the first conductor and the second conductor; it will be appreciated that increasing the capacitance between the first and second conductors decreases the voltage therebetween. Reducing the voltage in this manner can be advantageous because this can reduce the risk of a dielectric material of the capacitive transmission line becoming damaged.

The controller may be adapted/configured to modify, or for modifying, an amount of current flowing in each of a first conductor of the capacitive transmission line and a second conductor of the capacitive transmission line at any given time. Thus, the controller may be adapted/configured to modify, or for modifying, a relative amount of current in each of the first conductor and the second conductor at any given time. For example, the controller may be adapted/configured to maintain, or for maintaining, (i) an impedance of the first conductor which is higher than an impedance of the second conductor at an end of the transmission line where the first conductor is connected to the power source and/or (ii) an impedance of the first conductor which is lower than an impedance of the second conductor at an end of the transmission line where the second conductor is connected to a load. This can be advantageous because this may ensure current is distributed at least substantially equally between the first conductor and the second conductor along the length of the transmission line, preventing ends of the transmission line from overheating and thus reducing hazards and decreasing the likelihood of components of the transmission line becoming damaged when the transmission line is in use, transmitting power.

The capacitive transmission line may be a capacitive cable, a capacitive conductor, a capacitive winding, or a capacitive trace on a printed circuit board. Preferably, the capacitive transmission line is a capacitive cable. The capacitive transmission line may be a capacitive transmission line according to the second aspect of the invention.

According to a fourth aspect of the invention, there is provided a method of modifying an impedance of a capacitive transmission line having an impedance, comprising:
(a) receiving data about one or more load(s) connected to the capacitive transmission line and/or about a power transmission system the capacitive transmission line forms part of,
(b) determining a target impedance of the capacitive transmission line based on the data,
(c) comparing the impedance to the target impedance, and
(d) modifying the impedance to decrease a difference between the impedance and the target impedance,
characterised in that the impedance of the capacitive transmission line is modified by switching the impedance between at least two states, wherein in a first state the capacitive transmission line has a first impedance and functions as a capacitive transmission line, and wherein in a second state the capacitive transmission line has a second impedance, different to the first impedance, and functions as a capacitive transmission line.

Thus, the method of the invention can be advantageous because this can facilitate modification of the impedance of the capacitive transmission line without switching the capacitive transmission line to functioning as a conventional transmission line, unlike the protection arrangement disclosed in WO 2022/074260. This can mean the advantages of using a capacitive transmission line in a power transmission system are maintained, whilst protecting the transmission line from damage when, for example, excessively high voltages arise.

The impedance of the capacitive transmission line may be modified by switching the impedance between at least three states, wherein in each state the capacitive transmission line has an impedance different to the impedance of each of the other two states and functions as a capacitive transmission line. Preferably, the impedance of the capacitive transmission line is modified by switching the impedance between at least five states, wherein in each state the capacitive transmission line has an impedance different to the impedance of each of the other four states and functions as a capacitive transmission line. More preferably, the impedance of the capacitive transmission line is modified by switching the impedance between at least ten states, wherein in each state the capacitive transmission line has an impedance different to the impedance of each of the other nine states and functions as a capacitive transmission line. Even more preferably, the impedance of the capacitive transmission line is modified by switching the impedance between at least twenty states, wherein in each state the capacitive transmission line has an impedance different to the impedance of each of the other nineteen states and functions as a capacitive transmission line. The impedance of the capacitive transmission line may be modified by switching the impedance between an infinite number of states between a maximum impedance and a minimum impedance, wherein in each state the capacitive transmission line has an impedance different to the impedance of each of the other states and functions as a capacitive transmission line. Modifying the impedance by switching the impedance between a greater number of states can be advantageous because this can facilitate finer tuning of the impedance and thus can increase the likelihood of the impedance approximating or reaching an optimum impedance / a target impedance.

The impedance of the capacitive transmission line may be modified over a range of impedances / an impedance scale. The impedance may not be binarily switched such that the transmission line switches between a capacitive mode and a conventional mode. Instead, the impedance of the capacitive transmission line is modified by switching the impedance to one of at least two possible impedances whilst maintaining/keeping the capacitive transmission line functioning as a capacitive transmission line. It will be appreciated that the two impedances are distinct from each other, i.e. not the same. There are at least two possible impedances. Preferably, there are at least three possible impedances. More preferably, there are at least five possible impedances. Even more preferably, there are at least ten possible impedances. Yet even more preferably, there are at least twenty possible impedances. There may be an infinite number of impedances between a maximum impedance and a minimum impedance. Using a greater number of impedances can be advantageous because this can facilitate finer tuning of the impedance and thus can increase the likelihood of the impedance approximating or reaching an optimum impedance / a target impedance.

By operating over a range of impedances / an impedance scale and/or by modifying the impedance by switching the impedance between a plurality of states, the method of the invention can be advantageous because this can facilitate protection of the transmission line components when a slightly excessively high voltage is experienced without switching the transmission line to operating as a conventional transmission line, rather than as a capacitive transmission line. This can mean the advantages of operating as a capacitive transmission line are not lost whilst successfully protecting the transmission line components from the excessive voltage.

It will be appreciated that managing/modifying the impedance of the capacitive transmission line as described above not only modifies the impedance of the capacitive transmission line, but also the impedance of the electrical circuit which the capacitive transmission line forms part of. Thus, the method may comprise modifying an impedance of the power transmission system as a whole.

The target impedance may be the impedance required to optimise the system. For example, the target impedance may be an impedance required to maximise the efficiency of the system (e.g. to maximise the efficiency of power transmission using the system), an impedance required to minimise risks associated with a fault in the system, an impedance required to filter out / substantially eliminate a specific order of harmonic frequencies, and/or an impedance required to maintain an amount of current/power delivered/transmitted to a particular load at a particular value.

Preferably, the impedance of the capacitive transmission line is modified to substantially eliminate a difference between the impedance of the capacitive transmission line and the target impedance, i.e. to set the impedance of the capacitive transmission line at least substantially equal, or exactly equal, to the target impedance.

The one or more load(s) may be a plurality of loads. There may be at least two loads, at least three loads, at least five loads, at least ten loads, at least twenty loads, at least thirty loads, or at least fifty loads.

The data about the one or more load(s) may be data about an impedance state of each load. Alternatively or additionally, the data about the one or more load(s) may be data about the current and/or the voltage at each load. This can be advantageous because providing data about the impedance state of each load and/or the current and/or the voltage at each load may enable the determination of changes in impedance that may be needed to achieve the target impedance.

The data about the power transmission system may be data about an impedance of the power transmission system as a whole or about an impedance of a particular component of the power transmission system. This can be advantageous because providing data about such an impedance may enable the determination of changes in impedance that may be needed to achieve the target impedance.

The capacitive transmission line may be a capacitive transmission line according to the second aspect of the invention. Preferably, the capacitive transmission line is a capacitive cable. The method may comprise using an impedance management system to modify the impedance, which may be an impedance management system according to the third aspect of the invention.

In an example, the capacitive transmission line may have a starting impedance, a receiver may receive data about one or more load(s) connected to the capacitive transmission line, a processor may then determine a target impedance of the capacitive transmission line based on the data and may then compare the starting impedance to the target impedance, and a controller may then modify the impedance to decrease a difference between the starting impedance and the target impedance. The receiver, processor, and/or controller may be the receiver, processor, and/or controller of an impedance management system according to the third aspect of the invention.

According to a fifth aspect of the invention, there is a provided a wireless charging station for an electric vehicle comprising a power transmission system according to the first aspect of the invention. In a specific embodiment, there is provided a vehicle park, especially a car park, comprising the wireless charging station.

### Examples

The invention is now illustrated by way of the following examples, with reference to the accompanying drawings and Tables, in which:
Fig. 1 shows a schematic block diagram of a capacitive cable connected to a power source and to one load;
Fig. 2 shows a schematic block diagram of a capacitive cable connected to a power source and to five loads;
Fig. 3 shows a schematic block diagram of a capacitive cable having a means for modifying an impedance of the capacitive cable connected to a power source and to five loads;
Fig. 4 shows a schematic block diagram of a wireless electric vehicle charging system;
Fig. 5 shows a schematic block diagram of a central assembly for a wireless electric vehicle charging system connected to a power source;
Fig. 6 shows a schematic block diagram of a wireless electric vehicle charging system comprising the central assembly of Figure 5 having ten electric vehicles respectively parked at ten ground pads;
Fig. 7 shows a schematic block diagram of the wireless electric vehicle charging system of Figure 6 having four electric vehicles respectively parked at four ground pads, and thus having six ground pads not in use;
Fig. 8 shows a schematic block diagram of the wireless electric vehicle charging system of Figures 6 and 7 having one electric vehicle parked at a ground pad, and thus having nine ground pads not in use;
Fig. 9 shows a schematic block diagram of a power transmission system including a capacitive cable as a signal line and a capacitive cable as a return line and including four loads;
Fig. 10 shows a schematic block diagram of an impedance bank of the power transmission system of Figure 9;
Fig. 11 shows a schematic block diagram of a junction at which a load is connected to a second conductor of a transmission line;
Fig. 12 shows a schematic block diagram of a transmitter circuit of a wireless charging system;
Fig. 13 shows a schematic block diagram of a receiver circuit of a wireless charging system;
Fig. 14 shows a schematic block diagram of a transformer;
Fig. 15 shows a schematic block diagram of a capacitive cable having a means for modifying an impedance of the capacitive cable connected to a power source and to five loads;

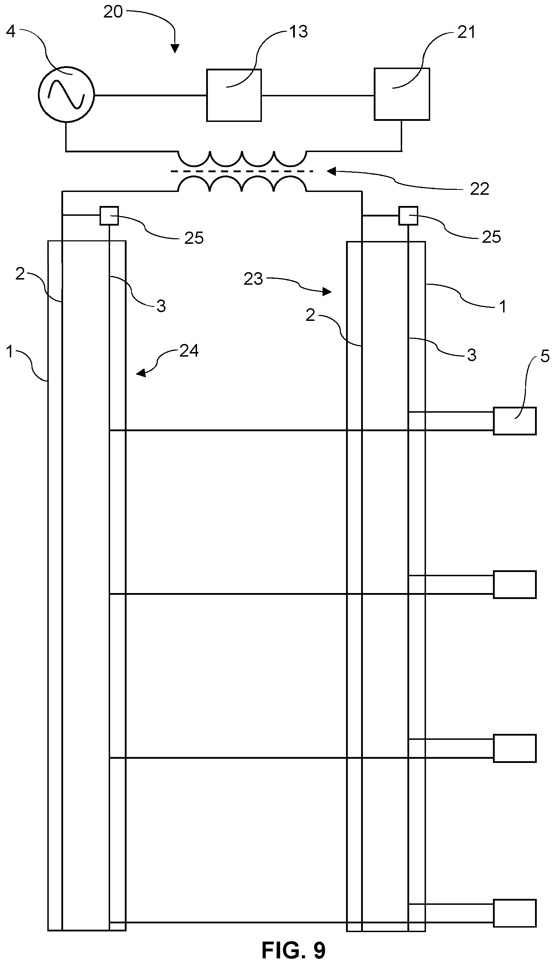

Table 1 shows current data from an experiment performed to test the effect of an impedance management system of the power transmission system of Figure 9;
Table 2 shows voltage data from the experiment performed to test the effect of the impedance management system of the power transmission system of Figure 9;
Table 3 shows power data from the experiment performed to test the effect of the impedance management system of the power transmission system of Figure 9;
Table 4 shows percentage increases in power achieved using an impedance management system and is based on the data shown in Table 3; and
Table 5 shows which electrical connections were activated/inactivated by the impedance management system during the experiment used to obtain the data shown in Tables 1 to 4.

### Example 1 - Capacitive Cable Connected to One Load

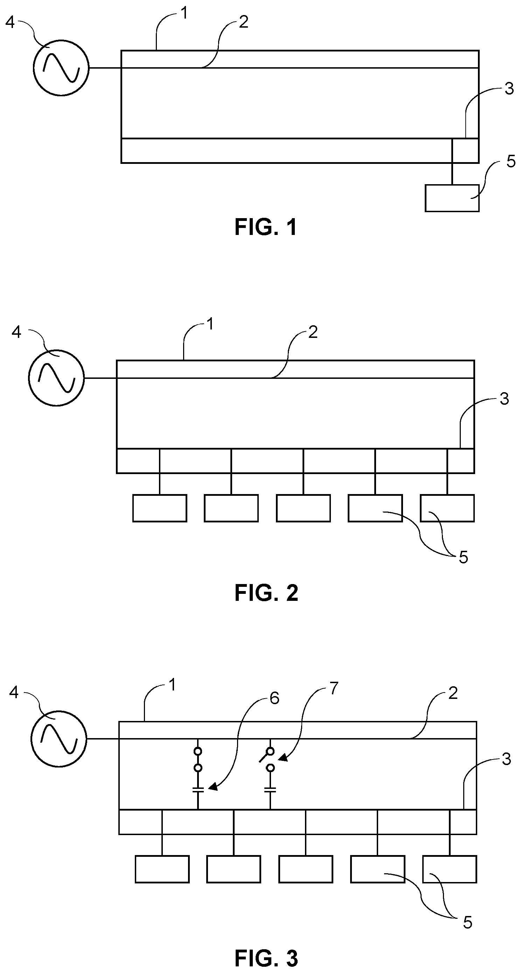

Referring to Figure 1, a capacitive cable 1 comprises a first conductor 2 and a second conductor 3 separated by a dielectric material (not shown in Figure 1). The first conductor is connected to a power source 4, whilst the second conductor is connected to a load 5. The first conductor is not connected to the load and the second conductor is not connected to the power source. It will be appreciated that connecting the conductors in this manner ensures the cable transmits power in use as a capacitive cable, rather than as a conventional cable. The capacitive cable is used as a signal line. A return line (not shown in Figure 1) is used to return power from the load to the power source to complete the electrical circuit.

### Example 2 - Capacitive Cable Connected to Five Loads

Referring to Figure 2, a capacitive cable 1 comprises a first conductor 2 and a second conductor 3 separated by a dielectric material (not shown in Figure 2). The first conductor is connected to a power source 4, whilst the second conductor is connected to five individual loads 5. The first conductor is not connected to any of the loads and the second conductor is not connected to the power source. It will be appreciated that connecting the conductors in this manner ensures that the cable transmits power in use as a capacitive cable, rather than as a conventional cable. The capacitive cable is used as a signal line. A return line (not shown in Figure 2) is used to return power from the loads to the power source to complete the electrical circuit.

### Example 3 - Capacitive Cable Comprising Means for Modifying an Impedance of the Capacitive Cable

Referring to Figure 3, a capacitive cable 1 comprises a first conductor 2 and a second conductor 3 separated by a dielectric material (not shown in Figure 3). The first conductor is connected to a power source 4, whilst the second conductor is connected to five individual loads 5. The first conductor is not connected to any of the loads and the second conductor is not connected to the power source. It will be appreciated that connecting the conductors in this manner ensures that the cable transmits power in use as a capacitive cable, rather than as a conventional cable. The capacitive cable is used as a signal line. A return line (not shown in Figure 3) is used to return power from the loads to the power source to complete the electrical circuit.

The capacitive cable comprises two capacitors 6 connected between the first conductor and the second conductor. Each of the two capacitors is individually switchable between an active state and an inactive state using switches 7. It will be appreciated that, in Figure 3, one capacitor is shown in the active state since its switch is closed, whilst the other capacitor is shown in the inactive state since its switch is open.

### Example 4 - Wireless Electric Vehicle Charging System

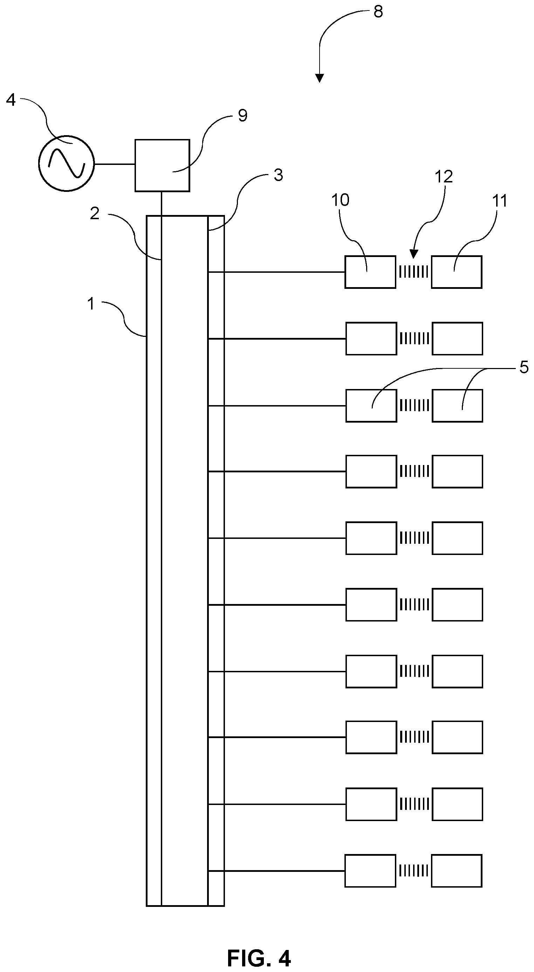

Referring to Figure 4, a wireless electric vehicle charging system 8 comprises a power source 4 connected to a central assembly 9. The central assembly comprises a converter (not shown in Figure 4) for converting alternating current supplied to it from the power source at a frequency of 50 Hz or 60 Hz to alternating current at a frequency of 85 kHz for output from the central assembly.

The central assembly is connected to a first conductor 2 of a capacitive cable 1 and thus supplies alternating current at a frequency of 85 kHz to the first conductor. The capacitive cable additionally comprises a dielectric material (not shown in Figure 4) between the first conductor and a second conductor 3 of the capacitive cable. Unlike the first conductor, the second conductor is not connected to the central assembly.

Thus, the dielectric material mediates a capacitive relationship in use between the first conductor and the second conductor, thereby ensuring the cable transmits power in use as a capacitive cable, rather than as a conventional cable.

The second conductor of the capacitive cable is connected to ten ground pads 10, which act as loads 5 and draw power from the wireless electric vehicle charging system when electric vehicles (not shown in Figure 4) park at them. When power is supplied to the ground pads via the second conductor in the form of alternating current at a frequency of 85 kHz, each ground pad transmits this power to a respective car pad 11 of an electric vehicle parked at or near the ground pad. It will be appreciated that this transfer is achieved by wireless power transfer 12 and that the car pads are loads present at the ground pads. Thus, both the ground pads 10 and the car pads 11 are loads 5.

The capacitive cable is used as a signal line. A return line (not shown in Figure 4) is used to return power from the ground pads to the power source to complete the electrical circuit.

### Example 5 - Wireless Electric Vehicle Charging System

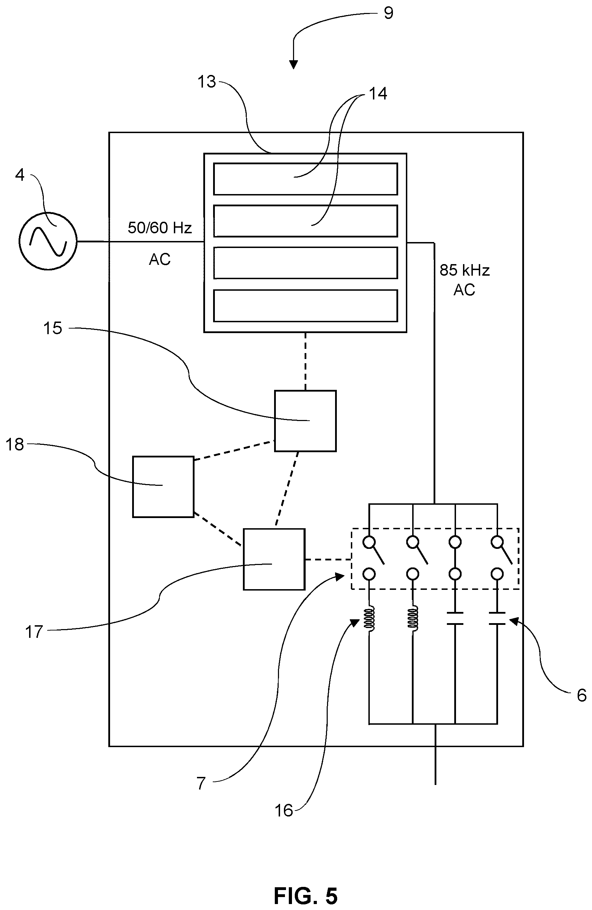

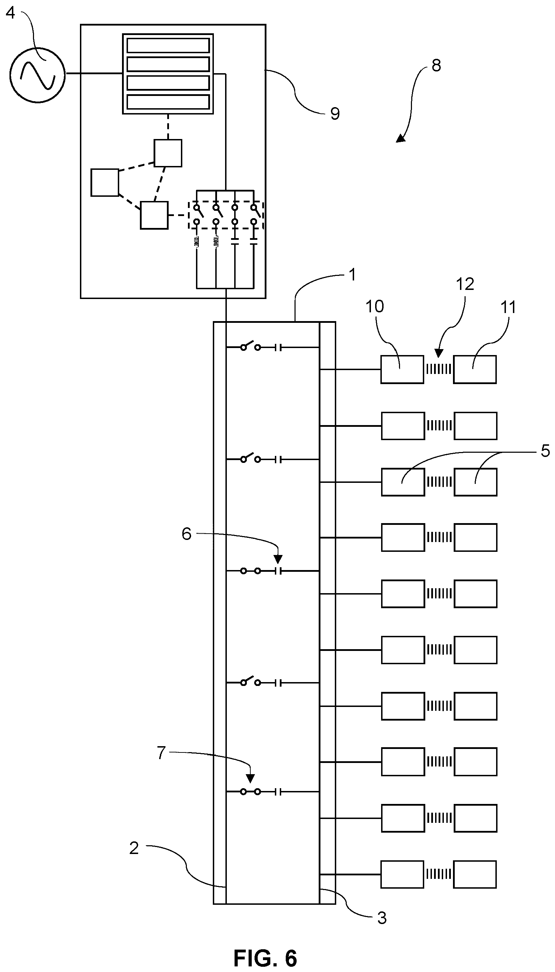

Referring to Figures 5 and 6, a wireless electric vehicle charging system 8 comprises a power source 4 connected to a central assembly 9, which is in the form of a cabinet. The power source supplies power in the form of alternating current at a frequency of 50 Hz or 60 Hz to a converter 13 positioned within the central assembly. The converter comprises four power amplifier modules 14, which may act as either four independent, i.e. distinct, 10 kW converters or in parallel as a single 40 kW converter. Whether these power amplifier modules act independently or in parallel is controlled by a converter controller 15, which is also positioned within the central assembly and which can communicate with, and thus control, the converter (communication is indicated by the dashed lines in Figures 5 and 6).

The converter converts the 50 Hz or 60 Hz alternating current input to an 85 kHz alternating current output and supplies this output current to a first conductor 2 of a capacitive cable 1.

The central assembly additionally comprises a plurality of capacitors 6 and a plurality of inductors 16 positioned within the central assembly, each of which is individually switchable between an active state and an inactive state using switches 7. It will be appreciated that, in Figures 5 and 6, one capacitor is shown in the active state since its switch is closed, whilst another capacitor and the inductors are shown in the inactive state since their respective switches are open. It will also be appreciated that, whilst only two capacitors and only two inductors are shown in Figures 5 and 6, many more capacitors and many more inductors may be used, in practice. The capacitors and inductors positioned within the central assembly are for modifying an overall impedance of the capacitive cable.

To modify the impedance of the capacitive cable using the above-described means, the central assembly additionally comprises a distributed variable impedance balancer control module 17, which acts as a controller for controlling the means for modifying the impedance of the capacitive cable. This controller can communicate with the switches and thus be used to modify which switches are open and which switches are closed at any given time.

The distributed variable impedance balancer control module can also communicate with the converter controller to control the frequency of the alternating current output from the converter. Whilst this output will normally be 85 kHz, the distributed variable impedance balancer control module and the converter controller can control the converter to output alternating current at a frequency within the range 70-95 kHz, and preferably within the range 79-90 kHz.

In addition to the first conductor, the capacitive cable comprises a second conductor 3 and a plurality of capacitors 6 connected between the first conductor and the second conductor, each of which is individually switchable between an active state and an inactive state using switches 7. These capacitors are distinct from those provided within the central assembly and are for modifying a plurality of local impedances at a plurality of points along the capacitive cable. The distributed variable impedance balancer control module 17 within the central assembly 9 controls which switches are open and which switches are closed at any given time.

The capacitive cable additionally comprises a dielectric material (not shown in Figure 6) between the first conductor and the second conductor.

The second conductor of the capacitive cable is connected to ten individual ground pads 10, which act as loads 5 and draw power from the power source when electric vehicles (not shown in Figures 5 and 6) park at them. When power is supplied to the ground pads via the second conductor in the form of alternating current at a frequency of 85 kHz, each ground pad transmits this power to a respective car pad 11 of an electric vehicle parked at or near the ground pad. It will be appreciated that this transfer is achieved by wireless power transfer 12 and that the car pads are loads present at the ground pads. Thus, both the ground pads 10 and the car pads 11 are loads 5.

A different type of electric vehicle may park at each ground pad when the wireless electric vehicle charging system is in use. Alternatively or additionally, electric vehicles requiring different amounts of power to be supplied to them may park at each ground pad and/or the amount of power required by each electric vehicle may change over time. Alternatively or additionally, electric vehicles may park at some ground pads but not others. Alternatively or additionally, an electric vehicle may park at one ground pad such that its car pad has good alignment with the ground pad, whilst another electric vehicle may park at another ground pad such that its car pad has poor alignment with the ground pad. In any event, it will be appreciated that the power required by each ground pad for transmitting to an electric vehicle may differ and may change over time, and thus the magnitude of the loads 5 may differ from each other and change over time.

Accordingly, each car pad is connected to a regulation control and communication unit (not shown in Figures 5 and 6) which continuously monitors the power demand of its electric vehicle. This information is then wirelessly transmitted to a regulation control and communication unit (not shown in Figures 5 and 6) connected to the ground pad at which that electric vehicle has parked. This information is then communicated to a communication controller 18 positioned within the central assembly 9, e.g. using wireless communications. The communication controller then uses this information to determine an impedance state of the relevant ground pad, and integrates the information received from each of the ten ground pads to determine a target impedance of the capacitive cable for each ground pad.

The communication controller and the distributed variable impedance balancer control module communicate with each other to determine whether the actual impedance of the capacitive cable is different, i.e. has deviated from, the target impedance. If the actual impedance matches the target impedance, then no changes are made. However, if the actual impedance is different to, i.e. has deviated from, the target impedance, then the distributed variable impedance balancer control module modifies the impedance of the capacitive cable by changing which capacitors 6 and/or inductors 16 are in the active and/or inactive state using the switches 7. Alternatively or additionally, the distributed variable impedance balancer control module can communicate with the converter controller to adjust whether the power amplifier modules operate independently of each other or in parallel with each other, and/or to adjust the frequency of the alternating current output from the converter. The result is that the impedance is modified to the target impedance, thereby increasing the efficiency of the system.

Importantly, the above-described monitoring and adjusting of the impedance of the capacitive cable occurs continuously, and thus the distributed variable impedance balancer control module is responsive to changes in the impedance state of each load whenever these occur.

It will be appreciated that, whilst the above has been described in terms of the distributed variable impedance balancer control module detecting a deviation of the impedance of the capacitive cable from the target impedance and modifying the impedance in response thereto, the distributed variable impedance balancer control module may alternatively be informed by the communication controller of an anticipated change in the impedance of each load and may thus adjust the impedance of the capacitive cable based on that anticipated change, rather than in response to a change that has already occurred.

The capacitive cable is used as a signal line. A return line (not shown in Figures 5 and 6) is used to return power from the ground pads to the power source to complete the electrical circuit.

### Example 6 - Wireless Electric Vehicle Charging System

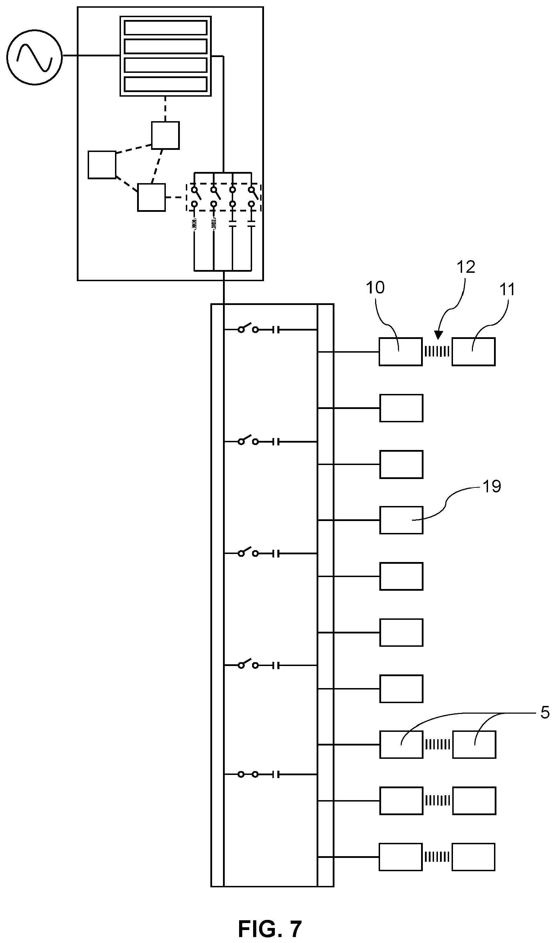

Referring to Figure 7, the wireless electric vehicle charging system of Example 5 has four electric vehicles (not shown in Figure 7) parked at four of the ten ground pads 10, which act as loads 5 and draw power from the power source when electric vehicles are parked at these ground pads. In particular, power is drawn from these ground pads by car pads 11 of the electric vehicles via wireless power transfer 12. No electric vehicles are parked at the remaining six ground pads 19 but these may nonetheless be considered as "loads" in the context of this invention.

As with Example 5 above, the communication controller and the distributed variable impedance balancer control module work in conjunction with each other to control the impedance of the capacitive cable such that a target impedance is achieved at each ground pad, thereby maximising the efficiency of the system.

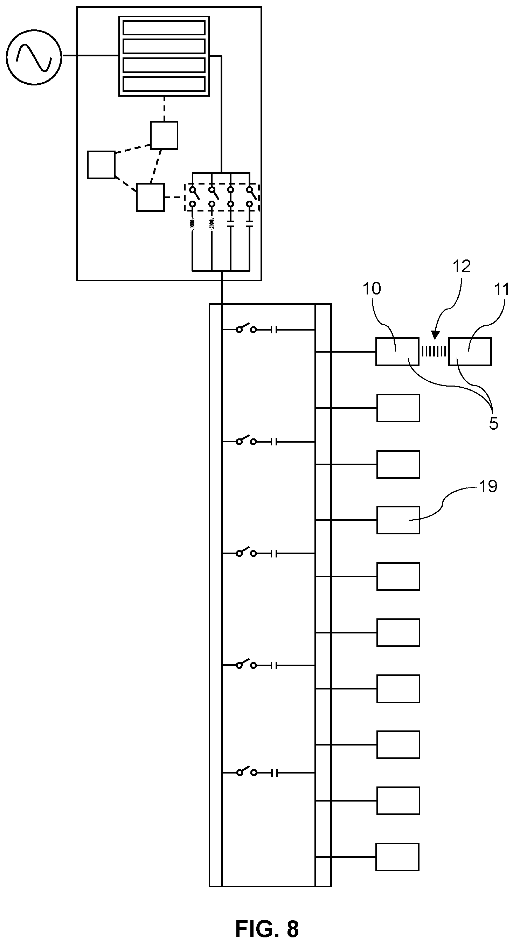

Referring to Figure 8, the wireless electric vehicle charging system of Figure 7 is shown once three of the electric vehicles have finished charging and have thus driven away. As can be seen in Figure 8, one of the switches has changed from the closed position to the open position to modify the impedance in response to the three electric vehicles leaving.

### Example 7 - Power Transmission System

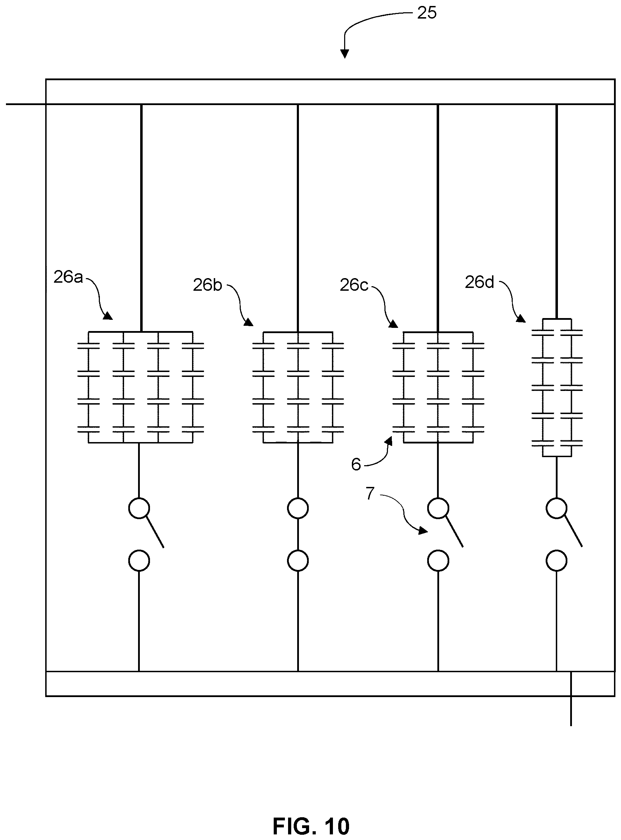

Referring to Figures 9 and 10, a power transmission system 20 was constructed. In this power transmission system, a power source 4 was used to supply three-phase alternating current at a frequency of 50 Hz to a converter 13, which then converted the 50 Hz alternating current input to an 85.221 kHz alternating current output and supplied this to a gyrator 21. The gyrator then supplied this 85.221 kHz alternating current to a 1:2 step-up transformer 22. From the step-up transformer, the current was supplied to a first conductor 2 of a capacitive cable 1. This capacitive cable comprised a dielectric material (not shown in Figures 9 and 10) between the first conductor and a second conductor 3 of the capacitive cable, and thus power was transmitted from the first conductor to the second conductor via a capacitive coupling. Four individual loads 5 were connected to the second conductor. Thus, the capacitive cable was a transmission line which acted as a signal line 23 to supply power from the power source to the loads.

The details of the loads are not shown in Figures 9 and 10. However, each load comprised a 2:1 step-down transformer connected to the second conductor of the capacitive cable. Current from the step-down transformer was then supplied to a compensation circuit before being passed onto a first 11 kW-rated wireless power transfer coil (a "transmitter coil"), which was configured to wirelessly transfer power to a second 11 kW-rated wireless power transfer coil (a "receiver coil"). From this receiver coil, current was supplied to a second compensation circuit and then onto a rectifier, which rectified the alternating current input to direct current ("DC") and supplied this to a DC load. The DC load used some of the power and the remaining power was then returned, via a return line, to the step-down transformer via the rectifier (which was bidirectional and thus able to act as an inverter to invert the DC input to alternating current), the compensation circuit connected to the receiver coil, the receiver coil, wireless power transfer to the transmitter coil, and then the compensation circuit connected to the transmitter coil.

In this return line, the step-down transformer described above then acted as a 1:2 step-up transformer and supplied the power to a second conductor 3 of a second capacitive cable 1. This capacitive cable comprised a dielectric material (not shown in Figures 9 and 10) between the second conductor and a first conductor 2, and thus power was transmitted from the second conductor to the first conductor via a capacitive coupling. This capacitive cable was a transmission line which acted as a return line 24 in this power transmission system. Power was returned from the first conductor to the power source via the step-up transformer 22, which in the return line acted as a 2:1 step-down transformer, to complete the electrical circuit.

Each of the capacitive cables in this power transmission system was 108 m in length. The four loads were connected at 27-metre intervals such that the first load was connected 27 m from the end of the signal line cable connected to the power source, the second load was connected 54 m therefrom, the third load was connected 81 m therefrom, and the fourth load was connected 108 m therefrom. The wires used to return power from the loads to the return line cable were connected at the corresponding positions of that cable.

At the end of each of the two capacitive cables where the first conductor was electrically connected to the power source, an impedance bank 25 was connected between the first conductor and the second conductor. The impedance banks were controlled by an impedance management system (not shown in Figures 9 and 10).

Each impedance bank comprised four electrical connections between the first conductor and the second conductor, each of which comprised a plurality of capacitors 6 collectively controlled/controllable via a switch 7. The four electrical connections were connected in parallel with each other between the first and second conductors.

The first electrical connection 26a comprised four repeats of four capacitors connected in series with each other, with each repeat connected in parallel with the other three repeats. Each capacitor in the first electrical connection was a 68 nF capacitor and thus the net capacitance added to the system by activating this electrical connection was 68 nF.

The second electrical connection 26b comprised three repeats of four capacitors connected in series with each other, with each repeat connected in parallel with the other two repeats. Each capacitor in the second electrical connection was a 68 nF capacitor and thus the net capacitance added to the system by activating this electrical connection was 51 nF.

The third electrical connection 26c comprised three repeats of four capacitors connected in series with each other, with each repeat connected in parallel with the other two repeats. Each capacitor in the third electrical connection was a 68 nF capacitor and thus the net capacitance added to the system by activating this electrical connection was 51 nF.

The fourth electrical connection 26d comprised two repeats of five capacitors connected in series with each other, with each repeat connected in parallel with the other repeat. Each capacitor in the fourth electrical connection was a 180 nF capacitor and thus the net capacitance added to the system by activating this electrical connection was 72 nF.

It will be appreciated that, in Figure 10, the second electrical connection 26b is shown in the active state since its switched is closed, whilst the first, third, and fourth electrical connections 26a, 26c, and 26d are each shown in the inactive state since their respective switches are open. It will also be appreciated that activating more than one of these electrical connections at the same time has a cumulative effect such that activating the first and second electrical connections 26a and 26b, for example, would have added 119 nF of capacitance to the capacitive cable, and thus the power transmission system.

The above-described power transmission system was then tested to compare whether the system operated better when the impedance management system ("IMS") was active, i.e. used to modify the impedance of the two capacitive cables / to control which electrical connections in each of the impedance banks were active at any given time, or when the impedance management system was inactive, i.e. when all switches in both impedance banks were continuously open. The results of this experiment are shown in Tables 1 to 5. In each of these Tables, references to "load 1" are intended to mean the load connected 27 m from the end of the signal line cable connected to the power source, references to "load 2" are intended to mean the load connected 54 m therefrom, references to "load 3" are intended to mean the load connected 81 m therefrom, and references to "load 4" are intended to mean the load connected 108 m therefrom.

During the experiment, different combinations of the four loads were activated and the input current from the converter, as well as the output current at each load, were measured. These data are shown in Table 1. Corresponding measurements were additionally made for voltage (Table 2) and power (Table 3).

From Tables 1 and 2, it can be seen that, with the impedance management system active, the voltage across the first and second conductors was reduced, compared to having the impedance management system inactive, when the current was kept substantially the same. This means that, for a given current, the voltage pressure on the dielectric material was reduced by using the impedance management system, which reduced the risk of the dielectric material becoming damaged during use. This also means that, for a given voltage, a greater amount of current could be delivered to each load.

Table 4 is based on the data shown in Table 3 and shows the percentage increase in power achieved by activating the impedance management system. Thus, from Tables 3 and 4, it can be seen that, when the impedance management system was active, a higher input power and a higher output power were generated compared to having the impedance management system inactive.

Table 5 shows which electrical connections were activated by the impedance management system when the impedance management system was active for each of the various load combinations, as well as the total amount of capacitance added to each of the signal and return lines in each case. It will be appreciated that the impedance management system controlled the switches in each of the two impedance banks in the same manner in this experiment, i.e. the combination of switches open in one of these banks was the same as the combination of switches open in the other bank throughout the experiment.

### Example 8 - Junction

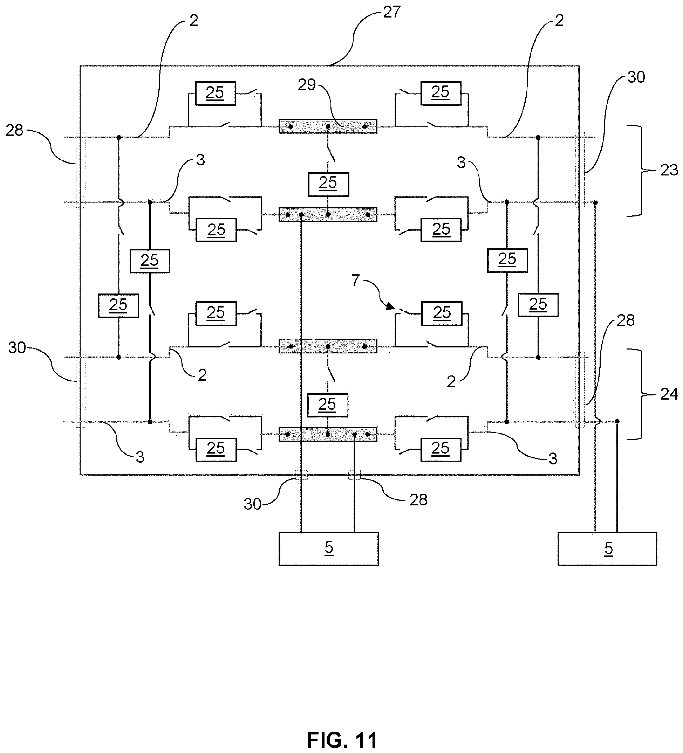

Referring to Figure 11, a transmission line comprises a first conductor 2 and a second conductor 3 with a dielectric material (not shown in Figure 11) therebetween. The first conductor and the second conductor each enter a junction box 27 through an entry port 28 therefor. Inside the junction box, each of the first conductor and the second conductor has a copper busbar 29 connected between two parts thereof. On the other side of the junction box, the first and second conductors exit the junction box through an exit port 30 therefor. This transmission line is used as a signal line 23.

A second transmission line is connected in a similar manner to the transmission line described above, but is used as a return line 24, rather than as a signal line. Thus, the second transmission line comprises a first conductor 2 and a second 3 with a dielectric material (not shown in Figure 11) therebetween. The first conductor and the second conductor each enter the junction box through an entry port 28 therefor. Inside the junction box, each of the first conductor and the second conductor has a copper busbar connected between two parts thereof. On the other side of the junction box, the first and second conductors exit the junction box through an exit port 30 therefor.

On the side of the junction box where the signal line conductors exit the junction box and the return line conductors enter the junction box, the second conductor of each transmission line is connected to a load 5. The busbar connected between the two parts of the second conductor of the signal line is connected to a second load 5 by a wire which exits the junction box through an exit port 30 therefor. Similarly, the second load 5 is connected to the busbar connected between the two parts of the second conductor of the return line via a wire which enters the junction box through an entry port 28 therefor.

Thus, the junction box facilitates connection of the second conductors of each of the signal and return lines to two loads.

Inside the junction box, there are fourteen impedance banks 25. Each of these can have a similar setup to the impedance banks of Example 7 above, but can alternatively have different setups. Thus, each impedance bank may comprise one or more electrical connection(s) comprising one or more capacitor(s), inductor(s), and/or resistor(s) which may be individually or collectively controllable. Each impedance bank is individually controllable via a switch 7, the position of which determines whether the impedance bank is active or inactive at any given time. Some of the impedance banks are connected between the first conductor of the signal line and the first conductor of the return line, whilst others are connected between the second conductor of the signal line and the second conductor of the return line. Yet other impedance banks are connected in series with one of the conductors.

All of the conductors are controlled by a distributed variable impedance balancer control module (not shown in Figure 11) of the power transmission system which all of these electrical components form part of.

### Example 9 - Wireless Power Transfer

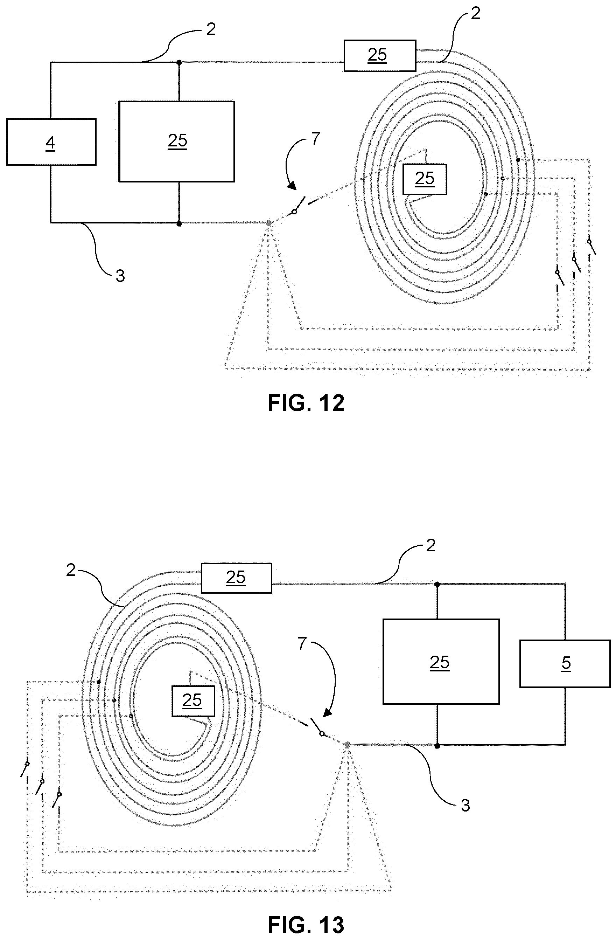

Referring to Figure 12, a power transmission system comprises a power source 4 configured to output power to a first conductor 2 of a transmission line. The transmission line comprises a second conductor 3 and a dielectric material (not shown in Figure 12) between the first conductor and the second conductor. The second conductor is used to return power to the power source.

The transmission line is not connected to a load. Instead, a part of the first conductor and a part of the second conductor are collectively wound into a coil. It will nonetheless be appreciated that one or more load(s) could be connected to the second conductor of the transmission line, and thus that the second conductor is suitable for connection to one or more load(s).

When the power source is active, supplying power, a magnetic field is generated around the coil. Thus, the coil can be used as a transmitter coil in a wireless charging system, such as in a ground pad of a wireless electric vehicle charging system.

Referring to Figure 13, a power transmission system similar to that described above comprises a transmission line having a first conductor 2 and a second conductor 3 with a dielectric material (not shown in Figure 13) therebetween. A part of the first conductor and a part of the second conductor are collectively wound into a coil. When this coil is positioned within a magnetic field, a current is induced therein, and thus the coil is configured to wirelessly receive power. Thus, the coil can be used as a receiver coil in a wireless charging system, such as in a car pad of an electric vehicle.

When a current is induced in the coil, power is transmitted via the first conductor to a load 5. The second conductor is then used to return power to the first conductor via the dielectric material to complete the electrical circuit.

The first conductor is not connected to a power source, but it will nonetheless be appreciated that a power source could be connected to the first conductor of the transmission line, and thus that the first conductor is suitable for connection to a power source.

Three impedance banks 25 are connected as part of each of the power transmission systems illustrated in Figures 12 and 13. Each impedance bank comprises a plurality of electrical connections (not shown in Figures 12 and 13) between the first conductor and the second conductor. As with Example 8 above, each impedance bank can have a variety of setups, with an example being a setup analogous to the impedance bank of Example 7 above.

Importantly, each of these power transmission systems additionally comprises four electrical connections each of which is in series with the second conductor and each of which is configured to be individually controlled by a switch 7. Only one of these four switches will be active, i.e. closed, at any given time. All of the four switches are controlled by a distributed variable impedance balancer control module (not shown in Figures 12 and 13) of the power transmission system. By controlling which of these four switches is active at any given time, this control module can modify the impedance of the transmission line by changing the number of turns in the coil. This control module can also control switches of the impedance banks, which also facilitates modification of the impedance of the transmission line.

The power transmission systems of Figures 12 and 13 can be used in a wireless electric vehicle charging system, with the coil of Figure 12 being used as a transmitter coil in a ground pad of the wireless electric vehicle charging system and the coil of Figure 13 being used as a receiver coil in a car pad of an electric vehicle being charged using the wireless electric vehicle charging system. In this example, the load 5 may be a battery of the electric vehicle. Power can thus be supplied from the power source 4 to the load 5 via wireless power transfer from the transmitter coil to the receiver coil.

### Example 10 - Transformer

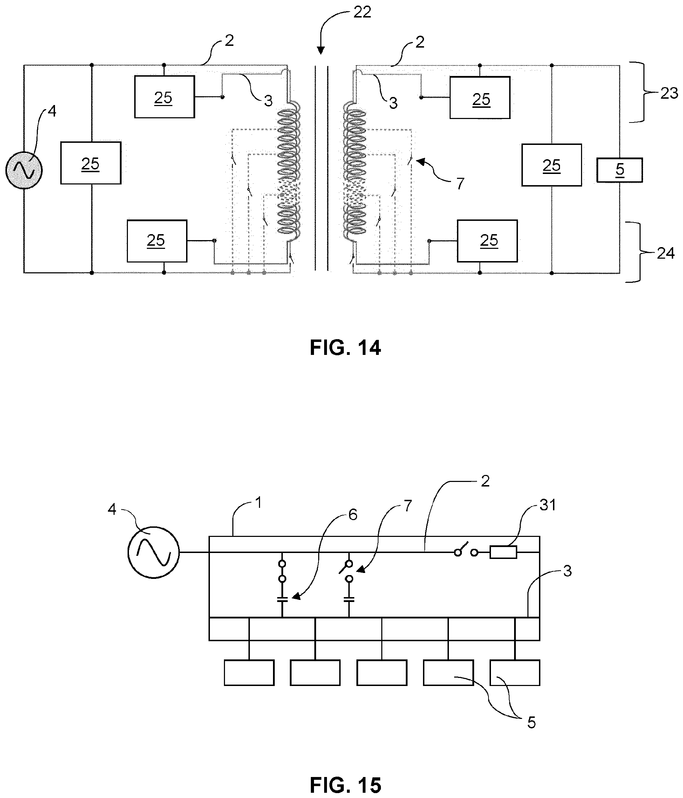

Referring to Figure 14, a power transmission system comprises a power source 4 configured to output power to a first conductor 2 of a transmission line. The transmission line comprises a second conductor 3 and a dielectric material (not shown in Figure 14) between the first conductor and the second conductor. The second conductor is used to return power to the power source.

A part of the first conductor and a part of the second conductor are collectively wound into a coil, which is used as a primary coil of a transformer 22.

The transmission line is not connected to a load, but it will nonetheless be appreciated that one or more load(s) could be connected to the second conductor of the transmission line, and thus that the second conductor is suitable for connection to one or more load(s).

A second power transmission system similar to that described above comprises a transmission line having a first conductor 2 and a second conductor 3 with a dielectric material (not shown in Figure 14) therebetween. A part of the first conductor and a part of the second conductor are collectively wound into a coil, which is used as a secondary coil of the transformer. When this secondary coil is positioned within a magnetic field, a current is induced therein, and thus the secondary coil is configured to receive power from the primary coil.

When a current is induced in the secondary coil, power is transmitted via the first conductor to a load 5. The second conductor is then used to return power to the first conductor via the dielectric material.

The first conductor is not connected to a power source, but it will nonetheless be appreciated that a power source could be connected to the first conductor of the transmission line, and thus that the first conductor is suitable for connection to a power source.

Thus, power can be supplied from the power source to the first conductor of the transmission line on the primary side of the transformer, and then to the second conductor of this transmission line via the dielectric material. Power can then be supplied across the transformer to the first conductor of the transmission line on the secondary side of the transformer, which then supplies power to the load. In this manner, power is supplied from the power source to the load via a signal line 23. The load then uses some of the power, with the remaining power then being returned via the second conductor of the transmission line on the secondary side of the transformer to the secondary coil. Power can then be returned across the transformer to the second conductor of the transmission line on the primary side of the transformer, which then returns power to the power source. In this manner, power is returned from the load to the power source via a return line 24.

Three impedance banks 25 are connected on each side of the transformer. Each impedance bank comprises a plurality of electrical connections (not shown in Figure 14) between the first conductor and the second conductor. As with Examples 8 and 9 above, each impedance bank can have a variety of setups, with an example being a setup analogous to the impedance bank of Example 7 above.

Importantly, each of these power transmission systems additionally comprises four electrical connections each of which is in series with the second conductor and each of which is configured to be individually controlled by a switch 7. Only one of these four switches will be active, i.e. closed, at any given time. All of the four switches are controlled by a distributed variable impedance balancer control module (not shown in Figure 14) of the power transmission system. By controlling which of these four switches is active at any given time, this control module can modify the impedance of the transmission line by changing the number of turns in the coil. This control module can also control switches of the impedance banks, which also facilitates modification of the impedance of the transmission line.

### Example 11 - Capacitive Cable Comprising Means for Modifying an Impedance of the Capacitive Cable

Referring to Figure 15, a capacitive cable 1 comprises a first conductor 2 and a second conductor 3 separated by a dielectric material (not shown in Figure 15). The first conductor is connected to a power source 4, whilst the second conductor is connected to five individual loads 5. The first conductor is not connected to any of the loads and the second conductor is not connected to the power source. It will be appreciated that connecting the conductors in this manner ensures that the cable transmits power in use as a capacitive cable, rather than as a conventional cable. The capacitive cable is used as a signal line. A return line (not shown in Figure 15) is used to return power from the loads to the power source to complete the electrical circuit.

The capacitive cable comprises two capacitors 6 connected between the first conductor and the second conductor. The capacitive cable additionally comprises a resistor 31 connected in series with the first conductor. Each of the two capacitors and the resistor is individually switchable between an active state and an inactive state using a switch 7. It will be appreciated that, in Figure 15, one capacitor is shown in the active state since its switch is closed, whilst the other capacitor and the resistor are shown in the inactive state since their respective switches are open.

### Parts List

- 1: capacitive cable
- 2: first conductor
- 3: second conductor
- 4: power source
- 5: load
- 6: capacitor
- 7: switch
- 8: wireless electric vehicle charging system
- 9: central assembly
- 10: ground pad
- 11: car pad
- 12: wireless power transfer
- 13: converter
- 14: power amplifier module
- 15: converter controller
- 16: inductor
- 17: distributed variable impedance balancer control module
- 18: communication controller
- 19: ground pad at which no electric vehicle is parked
- 20: power transmission system
- 21: gyrator
- 22: transformer
- 23: signal line
- 24: return line
- 25: impedance bank
- 26: electrical connection
- 27: junction box
- 28: entry port
- 29: busbar
- 30: exit port
- 31: resistor

**Table 1 - Effect of an Impedance Management System on the Delivery of Current to Four Loads Using a Capacitive Cable**

| **Active Loads** | **Input Current / A** | | **Output Current at Load 1 / A** | | **Output Current at Load 2 / A** | | **Output Current at Load 3 / A** | | **Output Current at Load 4 / A** | |
|---|---|---|---|---|---|---|---|---|---|---|
| | **IMS inactive** | **IMS active** | **IMS inactive** | **IMS active** | **IMS inactive** | **IMS active** | **IMS inactive** | **IMS active** | **IMS inactive** | **IMS active** |
| **1** | 11.3 | 12.0 | 19.0 | 19.4 | 0.0 | 0.0 | 0.0 | 0.0 | 0.0 | 0.0 |
| **2** | 12.0 | 13.2 | 0.0 | 0.0 | 19.4 | 20.4 | 0.0 | 0.0 | 0.0 | 0.0 |
| **3** | 12.0 | 13.2 | 0.0 | 0.0 | 0.0 | 0.0 | 19.4 | 20.4 | 0.0 | 0.0 |
| **4** | 10.9 | 13.2 | 0.0 | 0.0 | 0.0 | 0.0 | 0.0 | 0.0 | 18.7 | 20.8 |
| **1, 2** | 21.0 | 25.3 | 18.0 | 19.4 | 17.7 | 19.6 | 0.0 | 0.0 | 0.0 | 0.0 |
| **1, 3** | 21.4 | 25.3 | 18.0 | 19.6 | 0.0 | 0.0 | 18.3 | 19.6 | 0.0 | 0.0 |
| **1, 4** | 21.4 | 25.7 | 18.0 | 19.6 | 0.0 | 0.0 | 0.0 | 0.0 | 18.0 | 20.2 |
| **2, 3** | 23.0 | 25.7 | 0.0 | 0.0 | 18.3 | 19.8 | 18.3 | 19.8 | 0.0 | 0.0 |
| **2, 4** | 23.0 | 26.1 | 0.0 | 0.0 | 18.3 | 19.8 | 0.0 | 0.0 | 19.0 | 20.0 |
| **3, 4** | 23.0 | 25.7 | 0.0 | 0.0 | 0.0 | 0.0 | 18.0 | 19.6 | 18.5 | 20.0 |
| **1,2,3** | 30.4 | 37.4 | 17.0 | 19.2 | 16.9 | 19.2 | 16.9 | 19.2 | 0.0 | 0.0 |
| **1,2,4** | 30.0 | 37.8 | 17.0 | 19.2 | 16.7 | 19.2 | 0.0 | 0.0 | 17.0 | 19.6 |
| **1,3,4** | 30.8 | 37.8 | 17.0 | 19.4 | 0.0 | 0.0 | 16.9 | 19.0 | 18.0 | 19.6 |
| **2, 3, 4** | 32.7 | 39.3 | 0.0 | 0.0 | 18.0 | 19.6 | 18.0 | 19.6 | 17.7 | 20.0 |
| **1,2,3,4** | 36.2 | 51.0 | 15.9 | 19.6 | 15.5 | 19.0 | 15.7 | 19.0 | 15.9 | 19.6 |

**Table 2 - Effect of an Impedance Management System on Voltage Across Four Loads Using a Capacitive Cable**

| **Active Loads** | **Input Voltage / V** | | **Output Voltage at Load 1 / V** | | **Output Voltage at Load 2 / V** | | **Output Voltage at Load 3 / V** | | **Output Voltage at Load 4 / V** | |
|---|---|---|---|---|---|---|---|---|---|---|
| | **IMS inactive** | **IMS active** | **IMS inactive** | **IMS active** | **IMS inactive** | **IMS active** | **IMS inactive** | **IMS active** | **IMS inactive** | **IMS active** |
| **1** | 573 | 575 | 340 | 350 | 0 | 0 | 0 | 0 | 0 | 0 |
| **2** | 571 | 573 | 0 | 0 | 347 | 365 | 0 | 0 | 0 | 0 |
| **3** | 575 | 573 | 0 | 0 | 0 | 0 | 345 | 358 | 0 | 0 |
| **4** | 574 | 571 | 0 | 0 | 0 | 0 | 0 | 0 | 330 | 362 |
| **1, 2** | 565 | 565 | 315 | 352 | 316 | 353 | 0 | 0 | 0 | 0 |
| **1, 3** | 568 | 566 | 325 | 353 | 0 | 0 | 319 | 347 | 0 | 0 |
| **1, 4** | 567 | 569 | 315 | 355 | 0 | 0 | 0 | 0 | 316 | 356 |
| **2, 3** | 568 | 573 | 0 | 0 | 328 | 355 | 321 | 347 | 0 | 0 |
| **2, 4** | 568 | 572 | 0 | 0 | 325 | 353 | 0 | 0 | 326 | 355 |
| **3, 4** | 569 | 570 | 0 | 0 | 0 | 0 | 319 | 347 | 326 | 355 |
| **1, 2, 3** | 568 | 569 | 304 | 348 | 302 | 345 | 296 | 339 | 0 | 0 |
| **1, 2, 4** | 564 | 569 | 299 | 347 | 299 | 345 | 0 | 0 | 299 | 347 |
| **1, 3, 4** | 567 | 570 | 307 | 351 | 0 | 0 | 296 | 337 | 302 | 345 |
| **2, 3, 4** | 566 | 562 | 0 | 0 | 312 | 353 | 304 | 345 | 311 | 352 |
| **1, 2, 3, 4** | 565 | 560 | 285 | 353 | 278 | 345 | 272 | 335 | 278 | 343 |

**Table 3 - Effect of an Impedance Management System on the Delivery of Power to Four Loads Using a Capacitive Cable**

| **Active Loads** | **Input Power / W** | | **Output Power at Load 1 / W** | | **Output Power at Load 2 / W** | | **Output Power at Load 3 / W** | | **Output Power at Load 4 / W** | |
|---|---|---|---|---|---|---|---|---|---|---|
| | **IMS inactive** | **IMS active** | **IMS inactive** | **IMS active** | **IMS inactive** | **IMS active** | **IMS inactive** | **IMS active** | **IMS inactive** | **IMS active** |
| **1** | 6474.9 | 6900.0 | 6392.0 | 6790.0 | 0.0 | 0.0 | 0.0 | 0.0 | 0.0 | 0.0 |
| **2** | 6852.0 | 7563.6 | 0.0 | 0.0 | 6731.8 | 7446.0 | 0.0 | 0.0 | 0.0 | 0.0 |
| **3** | 6900.0 | 7563.6 | 0.0 | 0.0 | 0.0 | 0.0 | 6693.0 | 7303.2 | 0.0 | 0.0 |
| **4** | 6256.6 | 7537.2 | 0.0 | 0.0 | 0.0 | 0.0 | 0.0 | 0.0 | 6171.0 | 7529.6 |
| **1, 2** | 11865.0 | 14294.5 | 5576.0 | 6828.8 | 5593.2 | 6918.8 | 0.0 | 0.0 | 0.0 | 0.0 |
| **1, 3** | 12155.2 | 14319.8 | 5882.0 | 6918.8 | 0.0 | 0.0 | 5837.7 | 6801.2 | 0.0 | 0.0 |
| **1, 4** | 12133.8 | 14623.3 | 5576.0 | 6958.0 | 0.0 | 0.0 | 0.0 | 0.0 | 5720.0 | 7191.2 |
| **2, 3** | 13064.0 | 14726.1 | 0.0 | 0.0 | 6002.4 | 7029.0 | 5874.3 | 6870.6 | 0.0 | 0.0 |
| **2, 4** | 13064.0 | 14929.2 | 0.0 | 0.0 | 5947.5 | 6989.4 | 0.0 | 0.0 | 6096.0 | 7100.0 |
| **3, 4** | 13087.0 | 14649.0 | 0.0 | 0.0 | 0.0 | 0.0 | 5838.0 | 6801.2 | 6031.0 | 7100.0 |
| **1,2,3** | 17267.2 | 21280.6 | 5138.0 | 6681.6 | 5103.8 | 6624.0 | 5002.4 | 6508.8 | 0.0 | 0.0 |
| **1,2,4** | 16920.0 | 21508.2 | 4993.0 | 6662.4 | 4993.3 | 6624.0 | 0.0 | 0.0 | 5173.0 | 6801.2 |
| **1, 3, 4** | 17463.6 | 21546.0 | 5250.0 | 6809.4 | 0.0 | 0.0 | 5002.4 | 6403.0 | 5285.0 | 6762.0 |
| **2, 3, 4** | 18508.2 | 22086.6 | 0.0 | 0.0 | 5522.0 | 6918.8 | 5320.0 | 6762.0 | 5504.7 | 7040.0 |
| **1,2,3,4** | 20453.0 | 28560.0 | 4531.5 | 6918.8 | 4309.0 | 6555.0 | 4270.4 | 6365.0 | 4420.2 | 6722.8 |

**Table 4 - Increase in Power Achieved by Using an Impedance Management System**

| **Active Loads** | **Increase in Power Achieved by Activating Impedance Management System / %** | | | | |
|---|---|---|---|---|---|
| | **Input Power** | **Output Power at Load 1** | **Output Power at Load 2** | **Output Power at Load 3** | **Output Power at Load 4** |
| **1** | 6.6 | 6.2 | - | - | - |
| **2** | 10.4 | - | 10.6 | - | - |
| **3** | 9.6 | - | - | 9.1 | - |
| **4** | 20.5 | - | - | - | 22.0 |
| **1, 2** | 20.5 | 22.5 | 23.7 | - | - |
| **1, 3** | 17.8 | 17.6 | - | 16.5 | - |
| **1, 4** | 20.5 | 24.8 | - | - | 25.7 |
| **2, 3** | 12.7 | - | 17.1 | 17.0 | - |
| **2, 4** | 14.3 | - | 17.5 | - | 16.5 |
| **3, 4** | 11.9 | - | - | 16.5 | 17.7 |
| **1, 2, 3** | 23.2 | 30.0 | 29.8 | 30.1 | - |
| **1, 2, 4** | 27.1 | 33.4 | 32.7 | - | 31.5 |
| **1, 3, 4** | 23.4 | 29.7 | - | 28.0 | 27.9 |
| **2, 3, 4** | 19.3 | - | 25.3 | 27.1 | 27.9 |
| **1, 2, 3, 4** | 39.6 | 52.7 | 52.1 | 49.0 | 52.1 |

**Table 5 - Combination of Electrical Connections Activated by an Impedance Management System for Different Load Combinations**

| **Active Loads** | **Electrical Connections Activated** | **Total Capacitance Added to Each of the Signal and Return Lines / nF** |
|---|---|---|
| **1** | First | 68 |
| **2** | First | 68 |
| **3** | First | 68 |
| **4** | First | 68 |
| **1, 2** | First, Second, Third | 170 |
| **1, 3** | First, Second, Third | 170 |
| **1, 4** | First, Second, Third | 170 |
| **2, 3** | First, Second | 119 |
| **2, 4** | First, Second | 119 |
| **3, 4** | First, Second | 119 |
| **1, 2, 3** | First, Second | 119 |
| **1, 2, 4** | First, Second | 119 |
| **1, 3, 4** | First, Second | 119 |
| **2, 3, 4** | First, Second, Third, Fourth | 242 |
| **1, 2, 3, 4** | First, Second, Third, Fourth | 242 |

## Claims

1. A power transmission system (8, 20), comprising:
(a) a power source (4),
(b) one or more load(s) (5), and
(c) a capacitive transmission line (1) having:
(i) a first conductor (2) connected to the power source (4) but not to the one or more load(s) (5),
(ii) a second conductor (3) connected to the one or more load(s) (5) but not to the power source (4), and
(iii) a dielectric material between the first conductor (2) and the second conductor (3),
**characterised in that** the power transmission system (8, 20) comprises:
(d) an impedance management system for modifying an impedance of the capacitive transmission line (1) by switching the impedance between at least two states, wherein in a first state the capacitive transmission line (1) has a first impedance and functions as a capacitive transmission line (1), and wherein in a second state the capacitive transmission line (1) has a second impedance, different to the first impedance, and functions as a capacitive transmission line (1).

2. A power transmission system (8, 20) as claimed in claim 1, wherein the impedance management system is for modifying the impedance of the capacitive transmission line (1) by switching the impedance between at least three states, wherein in each state the capacitive transmission line (1) has an impedance different to the impedance of each of the other two states and functions as a capacitive transmission line (1).

3. A power transmission system (8, 20) as claimed in claim 1 or claim 2, wherein the one or more load(s) (5) is a plurality of loads (5).

4. A power transmission system (8, 20) as claimed in any one of claims 1 to 3, wherein the impedance management system comprises:
(a) a receiver for receiving data about the one or more load(s) (5) and/or about the power transmission system (8, 20),
(b) a processor for determining a target impedance of the capacitive transmission line (1) based on the data, and
(c) a controller for modifying the impedance of the capacitive transmission line (1) in accordance with the target impedance.

5. A power transmission system (8, 20) as claimed in any one of claims 1 to 4, wherein the impedance management system is for modifying an overall impedance of the capacitive transmission line (1) or one or more local impedance(s) at one or more point(s) along the capacitive transmission line (1).

6. A power transmission system (8, 20) as claimed in any one of claims 1 to 5, wherein the impedance management system is for modifying the impedance of the capacitive transmission line (1) in response to a change in the one or more load(s) (5).

7. A power transmission system (8, 20) as claimed in any one of claims 1 to 6, wherein the impedance management system is for modifying the impedance of the capacitive transmission line (1) in anticipation of a change in the one or more load(s) (5).

8. A power transmission system (8, 20) as claimed in any one of claims 1 to 7, wherein the capacitive transmission line (1) comprises one or more electrical connection(s) (26) each of which is between the first conductor (2) and the second conductor (3) or in series with the first conductor (2) or the second conductor (3), and each of which is configured to be individually controlled.

9. A capacitive transmission line (1) for a power transmission system (8, 20) as claimed in any one of claims 1 to 8, comprising:
(a) a first conductor (2) for connection to a power source (4) but not to one or more load(s) (5),
(b) a second conductor (3) for connection to the one or more load(s) (5) but not to the power source (4),
(c) a dielectric material between the first conductor (2) and the second conductor (3), and
(d) one or more electrical connection(s) (26) each of which is between the first conductor (2) and the second conductor (3) or in series with the first conductor (2) or the second conductor (3),
**characterised in that** each of the one or more electrical connection(s) (26) is configured to be individually controlled, such that an impedance of the capacitive transmission line (1) can be switched between at least two states, wherein in a first state the capacitive transmission line (1) has a first impedance and functions as a capacitive transmission line (1), and wherein in a second state the capacitive transmission line (1) has a second impedance, different to the first impedance, and functions as a capacitive transmission line (1).

10. A capacitive transmission line (1) as claimed in claim 9, wherein the one or more electrical connection(s) (26) is a plurality of electrical connections (26).

11. A capacitive transmission line (1) as claimed in claim 10, wherein there are at least three electrical connections (26).

12. A capacitive transmission line (1) as claimed in any one of claims 9 to 11, wherein each of the one or more electrical connection(s) (26) comprises one capacitor (6), one inductor (16), or one resistor (31) which is individually controllable via a switch (7).

13. A capacitive transmission line (1) as claimed in any one of claims 9 to 11, wherein each of the one or more electrical connection(s) (26) comprises a plurality of capacitors (6), a plurality of inductors (16), a plurality of resistors (31), or a plurality of electrical components each of which is a capacitor (6), an inductor (16), or a resistor (31), which are collectively controllable via a switch (7).

14. An impedance management system for a power transmission system (8, 20) as claimed in any one of claims 1 to 8, comprising:
(a) a receiver for receiving data about one or more load(s) (5) and/or about the power transmission system (8, 20),
(b) a processor for determining a target impedance of a capacitive transmission line (1) based on the data, and
(c) a controller for modifying an impedance of the capacitive transmission line (1) in accordance with the target impedance,
**characterised in that** the controller is for modifying the impedance of the capacitive transmission line (1) by switching the impedance between at least two states, wherein in a first state the capacitive transmission line (1) has a first impedance and functions as a capacitive transmission line (1), and wherein in a second state the capacitive transmission line (1) has a second impedance, different to the first impedance, and functions as a capacitive transmission line (1).

15. An impedance management system as claimed in claim 14, wherein the controller is for modifying the impedance of the capacitive transmission line (1) by switching the impedance between at least three states, wherein in each state the capacitive transmission line (1) has an impedance different to the impedance of each of the other two states and functions as a capacitive transmission line (1).

16. An impedance management system as claimed in claim 14 or claim 15, wherein the one or more load(s) (5) is a plurality of loads (5).

17. A method of modifying an impedance of a capacitive transmission line (1) having an impedance, comprising:
(a) receiving data about one or more load(s) (5) connected to the capacitive transmission line (1) and/or about a power transmission system (8, 20) the capacitive transmission line (1) forms part of,
(b) determining a target impedance of the capacitive transmission line (1) based on the data,
(c) comparing the impedance to the target impedance, and
(d) modifying the impedance to decrease a difference between the impedance and the target impedance,
**characterised in that** the impedance of the capacitive transmission line (1) is modified by switching the impedance between at least two states, wherein in a first state the capacitive transmission line (1) has a first impedance and functions as a capacitive transmission line (1), and wherein in a second state the capacitive transmission line (1) has a second impedance, different to the first impedance, and functions as a capacitive transmission line (1).

18. A method of modifying an impedance of a capacitive transmission line (1) as claimed in claim 17, wherein the impedance of the capacitive transmission line (1) is modified by switching the impedance between at least three states, wherein in each state the capacitive transmission line (1) has an impedance different to the impedance of each of the other two states and functions as a capacitive transmission line (1).

19. A method of modifying an impedance of a capacitive transmission line (1) as claimed in claim 17 or claim 18, wherein the capacitive transmission line (1) is a capacitive transmission line (1) according to any one of claims 9 to 13.

20. A wireless charging station for an electric vehicle comprising a power transmission system (8) as claimed in any one of claims 1 to 8.

21. A vehicle park comprising a wireless charging station as claimed in claim 20.

## Patentansprüche

1. Leistungsübertragungssystem (8, 20), umfassend:
(a) eine Leistungsquelle (4),
(b) eine oder mehrere Last(en) (5), und
(c) eine kapazitive Übertragungsleitung (1) mit:
(i) einem ersten Leiter (2), der mit der Leistungsquelle (4), aber nicht mit der einen oder den mehreren Last(en) (5) verbunden ist,
(ii) einem zweiten Leiter (3), der mit der einen oder den mehreren Last(en) (5), aber nicht mit der Leistungsquelle (4) verbunden ist, und
(iii) einem dielektrischen Material zwischen dem ersten Leiter (2) und dem zweiten Leiter (3),
**dadurch gekennzeichnet, dass** das Leistungsübertragungssystem (8, 20) Folgendes umfasst:
(d) ein Impedanzmanagementsystem zum Modifizieren einer Impedanz der kapazitiven Übertragungsleitung (1) durch Schalten der Impedanz zwischen zumindest zwei Zuständen, wobei in einem ersten Zustand die kapazitive Übertragungsleitung (1) eine erste Impedanz aufweist und als kapazitive Übertragungsleitung (1) fungiert und wobei in einem zweiten Zustand die kapazitive Übertragungsleitung (1) eine zweite Impedanz aufweist, die sich von der ersten Impedanz unterscheidet, und als kapazitive Übertragungsleitung (1) fungiert.

2. Leistungsübertragungssystem (8, 20) nach Anspruch 1, wobei das Impedanzmanagementsystem zum Modifizieren der Impedanz der kapazitiven Übertragungsleitung (1) durch Schalten der Impedanz zwischen zumindest drei Zuständen ist, wobei in jedem Zustand die kapazitive Übertragungsleitung (1) eine Impedanz aufweist, die sich von der Impedanz von jedem der anderen zwei Zustände unterscheidet, und als kapazitive Übertragungsleitung (1) fungiert.

3. Leistungsübertragungssystem (8, 20) nach Anspruch 1 oder Anspruch 2, wobei die eine oder mehreren Last(en) (5) eine Vielzahl von Lasten (5) sind.

4. Leistungsübertragungssystem (8, 20) nach einem der Ansprüche 1 bis 3, wobei das Impedanzmanagementsystem Folgendes umfasst:
(a) einen Empfänger zum Empfangen von Daten über die eine oder mehreren Last(en) (5) und/oder über das Leistungsübertragungssystem (8, 20),
(b) einen Prozessor zum Bestimmen einer Zielimpedanz der kapazitiven Übertragungsleitung (1) basierend auf den Daten, und
(c) eine Steuerung zum Modifizieren der Impedanz der kapazitiven Übertragungsleitung (1) gemäß der Zielimpedanz.

5. Leistungsübertragungssystem (8, 20) nach einem der Ansprüche 1 bis 4, wobei das Impedanzmanagementsystem zum Modifizieren einer Gesamtimpedanz der kapazitiven Übertragungsleitung (1) oder von einer oder mehreren lokalen Impedanz(en) an einem oder mehreren Punkt(en) entlang der kapazitiven Übertragungsleitung (1) ist.

6. Leistungsübertragungssystem (8, 20) nach einem der Ansprüche 1 bis 5, wobei das Impedanzmanagementsystem zum Modifizieren der Impedanz der kapazitiven Übertragungsleitung (1) als Reaktion auf eine Änderung der einen oder mehreren Last(en) (5) ist.

7. Leistungsübertragungssystem (8, 20) nach einem der Ansprüche 1 bis 6, wobei das Impedanzmanagementsystem zum Modifizieren der Impedanz der kapazitiven Übertragungsleitung (1) in Erwartung einer Änderung der einen oder mehreren Last(en) (5) ist.

8. Leistungsübertragungssystem (8, 20) nach einem der Ansprüche 1 bis 7, wobei die kapazitive Übertragungsleitung (1) eine oder mehrere elektrische Verbindung(en) (26) umfasst, von denen jede zwischen dem ersten Leiter (2) und dem zweiten Leiter (3) oder in Reihe mit dem ersten Leiter (2) oder dem zweiten Leiter (3) ist und von denen jede dazu konfiguriert ist, individuell gesteuert zu werden.

9. Kapazitive Übertragungsleitung (1) für ein Leistungsübertragungssystem (8, 20) nach einem der Ansprüche 1 bis 8, umfassend:
(a) einen ersten Leiter (2) zur Verbindung mit einer Leistungsquelle (4), aber nicht mit einer oder mehreren Last(en) (5),
(b) einen zweiten Leiter (3) zur Verbindung mit der einen oder den mehreren Last(en) (5), aber nicht mit der Leistungsquelle (4),
(c) ein dielektrisches Material zwischen dem ersten Leiter (2) und dem zweiten Leiter (3), und
(d) eine oder mehrere elektrische Verbindung(en) (26), von denen jede zwischen dem ersten Leiter (2) und dem zweiten Leiter (3) oder in Reihe mit dem ersten Leiter (2) oder dem zweiten Leiter (3) ist,
**dadurch gekennzeichnet, dass** jede von der einen oder den mehreren elektrischen Verbindung(en) (26) dazu konfiguriert ist, individuell gesteuert zu werden, sodass eine Impedanz der kapazitiven Übertragungsleitung (1) zwischen zumindest zwei Zuständen geschaltet werden kann, wobei in einem ersten Zustand die kapazitive Übertragungsleitung (1) eine erste Impedanz aufweist und als kapazitive Übertragungsleitung (1) fungiert, und wobei in einem zweiten Zustand die kapazitive Übertragungsleitung (1) eine zweite Impedanz aufweist, die sich von der ersten Impedanz unterscheidet, und als kapazitive Übertragungsleitung (1) fungiert.

10. Kapazitive Übertragungsleitung (1) nach Anspruch 9, wobei die eine oder mehreren elektrischen Verbindung(en) (26) eine Vielzahl von elektrischen Verbindungen (26) sind.

11. Kapazitive Übertragungsleitung (1) nach Anspruch 10, wobei es zumindest drei elektrische Verbindungen (26) gibt.

12. Kapazitive Übertragungsleitung (1) nach einem der Ansprüche 9 bis 11, wobei jede von der einen oder den mehreren elektrischen Verbindung(en) (26) einen Kondensator (6), eine Induktivität (16) oder einen Widerstand (31) umfasst, der/die individuell über einen Schalter (7) steuerbar ist.

13. Kapazitive Übertragungsleitung (1) nach einem der Ansprüche 9 bis 11, wobei jede von der einen oder den mehreren elektrischen Verbindung(en) (26) eine Vielzahl von Kondensatoren (6), eine Vielzahl von Induktivitäten (16), eine Vielzahl von Widerständen (31) oder eine Vielzahl von elektrischen Komponenten umfasst, von denen jede(r) ein Kondensator (6), eine Induktivität (16) oder ein Widerstand (31) ist, die gemeinsam über einen Schalter (7) steuerbar sind.

14. Impedanzmanagementsystem für ein Leistungsübertragungssystem (8, 20) nach einem der Ansprüche 1 bis 8, umfassend:
(a) einen Empfänger zum Empfangen von Daten über eine oder mehrere Last(en) (5) und/oder über das Leistungsübertragungssystem (8, 20),
(b) einen Prozessor zum Bestimmen einer Zielimpedanz einer kapazitiven Übertragungsleitung (1) basierend auf den Daten, und
(c) eine Steuerung zum Modifizieren einer Impedanz der kapazitiven Übertragungsleitung (1) gemäß der Zielimpedanz,
**dadurch gekennzeichnet, dass** die Steuerung zum Modifizieren der Impedanz der kapazitiven Übertragungsleitung (1) durch Schalten der Impedanz zwischen zumindest zwei Zuständen ist, wobei in einem ersten Zustand die kapazitive Übertragungsleitung (1) eine erste Impedanz aufweist und als kapazitive Übertragungsleitung (1) fungiert und wobei in einem zweiten Zustand die kapazitive Übertragungsleitung (1) eine zweite Impedanz aufweist, die sich von der ersten Impedanz unterscheidet, und als kapazitive Übertragungsleitung (1) fungiert.

15. Impedanzmanagementsystem nach Anspruch 14, wobei die Steuerung zum Modifizieren der Impedanz der kapazitiven Übertragungsleitung (1) durch Schalten der Impedanz zwischen zumindest drei Zuständen ist, wobei in jedem Zustand die kapazitive Übertragungsleitung (1) eine Impedanz aufweist, die sich von der Impedanz von jedem von den anderen zwei Zuständen unterscheidet, und als kapazitive Übertragungsleitung (1) fungiert.

16. Impedanzmanagementsystem nach Anspruch 14 oder Anspruch 15, wobei die eine oder mehreren Last(en) (5) eine Vielzahl von Lasten (5) sind.

17. Verfahren zum Modifizieren einer Impedanz einer kapazitiven Übertragungsleitung (1) mit einer Impedanz, umfassend:
(a) Empfangen von Daten über eine oder mehrere Last(en) (5), die mit der kapazitiven Übertragungsleitung (1) verbunden sind, und/oder über ein Leistungsübertragungssystem (8, 20), von dem die kapazitive Übertragungsleitung (1) Teil bildet,
(b) Bestimmen einer Zielimpedanz der kapazitiven Übertragungsleitung (1) basierend auf den Daten,
(c) Vergleichen der Impedanz mit der Zielimpedanz, und
(d) Modifizieren der Impedanz, um eine Differenz zwischen der Impedanz und der Zielimpedanz zu verringern,
**dadurch gekennzeichnet, dass** die Impedanz der kapazitiven Übertragungsleitung (1) durch Schalten der Impedanz zwischen zumindest zwei Zuständen modifiziert wird, wobei in einem ersten Zustand die kapazitive Übertragungsleitung (1) eine erste Impedanz aufweist und als kapazitive Übertragungsleitung (1) fungiert und wobei in einem zweiten Zustand die kapazitive Übertragungsleitung (1) eine zweite Impedanz aufweist, die sich von der ersten Impedanz unterscheidet, und als kapazitive Übertragungsleitung (1) fungiert.

18. Verfahren zum Modifizieren einer Impedanz einer kapazitiven Übertragungsleitung (1) nach Anspruch 17, wobei die Impedanz der kapazitiven Übertragungsleitung (1) durch Schalten der Impedanz zwischen zumindest drei Zuständen modifiziert wird, wobei in jedem Zustand die kapazitive Übertragungsleitung (1) eine Impedanz aufweist, die sich von der Impedanz von jedem von den anderen zwei Zuständen unterscheidet, und als kapazitive Übertragungsleitung (1) fungiert.

19. Verfahren zum Modifizieren einer Impedanz einer kapazitiven Übertragungsleitung (1) nach Anspruch 17 oder Anspruch 18, wobei die kapazitive Übertragungsleitung (1) eine kapazitive Übertragungsleitung (1) nach einem der Ansprüche 9 bis 13 ist.

20. Drahtlose Ladestation für ein Elektrofahrzeug, umfassend ein Leistungsübertragungssystem (8) nach einem der Ansprüche 1 bis 8.

21. Fahrzeugpark, umfassend eine drahtlose Ladestation nach Anspruch 20.

## Revendications

1. Système de transmission d'énergie (8, 20), comprenant :
(a) une source d'alimentation (4) ;
(b) une ou plusieurs charges (5), et
(c) une ligne de transmission capacitive (1) comportant :
(i) un premier conducteur (2) connecté à la source d'alimentation (4) mais non auxdites une ou plusieurs charges (5),
(ii) un second conducteur (3) connecté auxdites une ou plusieurs charges (5) mais non à la source d'alimentation (4), et
(iii) un matériau diélectrique entre le premier conducteur (2) et le second conducteur (3),
**caractérisé en ce que** le système de transmission d'énergie (8, 20) comprend :
(d) un système de gestion d'impédance destiné à modifier une impédance de la ligne de transmission capacitive (1) en commutant l'impédance entre au moins deux états ; dans un premier état, ladite ligne de transmission capacitive (1) présentant une première impédance et fonctionnant comme une ligne de transmission capacitive (1), et dans un second état, ladite ligne de transmission capacitive (1) présentant une seconde impédance, différente de la première impédance, et fonctionnant comme une ligne de transmission capacitive (1).

2. Système de transmission d'énergie (8, 20) selon la revendication 1, ledit système de gestion d'impédance étant destiné à modifier l'impédance de la ligne de transmission capacitive (1) en commutant l'impédance entre au moins trois états ; dans chaque état, ladite ligne de transmission capacitive (1) présentant une impédance différente de l'impédance de chacun des deux autres états et fonctionnant comme une ligne de transmission capacitive (1).

3. Système de transmission d'énergie (8, 20) selon la revendication 1 ou la revendication 2, lesdites une ou plusieurs charges (5) étant une pluralité de charges (5).

4. Système de transmission d'énergie (8, 20) selon l'une quelconque des revendications 1 à 3, ledit système de gestion d'impédance comprenant :
(a) un récepteur destiné à recevoir des données sur lesdites une ou plusieurs charges (5) et/ou sur le système de transmission d'énergie (8, 20),
(b) un processeur destiné à déterminer une impédance cible de la ligne de transmission capacitive (1) sur la base des données, et
(c) un dispositif de commande destiné à modifier l'impédance de la ligne de transmission capacitive (1) conformément à l'impédance cible.

5. Système de transmission d'énergie (8, 20) selon l'une quelconque des revendications 1 à 4, ledit système de gestion d'impédance étant destiné à modifier l'impédance globale de la ligne de transmission capacitive (1) ou une ou plusieurs impédances locales en un ou plusieurs points le long de ladite ligne de transmission capacitive (1).

6. Système de transmission d'énergie (8, 20) selon l'une quelconque des revendications 1 à 5, ledit système de gestion d'impédance étant destiné à modifier l'impédance de la ligne de transmission capacitive (1) en réponse à un changement desdites une ou plusieurs charges (5).

7. Système de transmission d'énergie (8, 20) selon l'une quelconque des revendications 1 à 6, ledit système de gestion d'impédance étant destiné à modifier l'impédance de la ligne de transmission capacitive (1) en prévision d'un changement desdites une ou plusieurs charges (5).

8. Système de transmission d'énergie (8, 20) selon l'une quelconque des revendications 1 à 7, ladite ligne de transmission capacitive (1) comprenant une ou plusieurs connexions électriques (26) dont chacune est comprise entre le premier conducteur (2) et le second conducteur (3) ou en série avec le premier conducteur (2) ou le second conducteur (3), et dont chacune est configurée pour être commandée individuellement.

9. Ligne de transmission capacitive (1) destinée à un système de transmission d'énergie (8, 20) selon l'une quelconque des revendications 1 à 8, comprenant :
(a) un premier conducteur (2) destiné à être connecté à une source d'alimentation (4) mais non à une ou plusieurs charges (5),
(b) un second conducteur (3) destiné à être connecté auxdites une ou plusieurs charges (5) mais non à la source d'alimentation (4),
(c) un matériau diélectrique entre le premier conducteur (2) et le second conducteur (3), et
(d) une ou plusieurs connexions électriques (26) dont chacune est comprise entre le premier conducteur (2) et le second conducteur (3) ou en série avec le premier conducteur (2) ou le second conducteur (3),
**caractérisée en ce que** chacune desdites une ou plusieurs connexions électriques (26) est configurée pour être commandée individuellement, de sorte qu'une impédance de la ligne de transmission capacitive (1) puisse être commutée entre au moins deux états ; dans un premier état, ladite ligne de transmission capacitive (1) présentant une première impédance et fonctionnant comme une ligne de transmission capacitive (1), et dans un second état, ladite ligne de transmission capacitive (1) présentant une seconde impédance, différente de la première impédance, et fonctionnant comme une ligne de transmission capacitive (1).

10. Ligne de transmission capacitive (1) selon la revendication 9, lesdites une ou plusieurs connexions électriques (26) étant une pluralité de connexions électriques (26).

11. Ligne de transmission capacitive (1) selon la revendication 10, au moins trois connexions électriques (26) s'y trouvant.

12. Ligne de transmission capacitive (1) selon l'une quelconque des revendications 9 à 11, chacune desdites une ou plusieurs connexions électriques (26) comprenant un condensateur (6), une bobine d'inductance (16) ou une résistance (31) qui peut être commandé individuellement par le biais d'un commutateur (7).

13. Ligne de transmission capacitive (1) selon l'une quelconque des revendications 9 à 11, chacune desdites une ou plusieurs connexions électriques (26) comprenant une pluralité de condensateurs (6), une pluralité de bobines d'inductance (16), une pluralité de résistances (31) ou une pluralité de composants électriques dont chacun est un condensateur (6), une bobine d'inductance (16) ou une résistance (31), qui peuvent être commandés collectivement par le biais d'un commutateur (7).

14. Système de gestion d'impédance destiné à un système de transmission d'énergie (8, 20) selon l'une quelconque des revendications 1 à 8, comprenant :
(a) un récepteur destiné à recevoir des données sur une ou plusieurs charges (5) et/ou sur le système de transmission d'énergie (8, 20),
(b) un processeur destiné à déterminer une impédance cible d'une ligne de transmission capacitive (1) sur la base des données, et
(c) un dispositif de commande destiné à modifier une impédance de la ligne de transmission capacitive (1) conformément à l'impédance cible,
**caractérisé en ce que** le dispositif de commande est destiné à modifier l'impédance de la ligne de transmission capacitive (1) en commutant l'impédance entre au moins deux états ; dans un premier état, ladite ligne de transmission capacitive (1) présentant une première impédance et fonctionnant comme une ligne de transmission capacitive (1), et dans un second état, ladite ligne de transmission capacitive (1) présentant une seconde impédance, différente de la première impédance, et fonctionnant comme une ligne de transmission capacitive (1).

15. Système de transmission d'impédance selon la revendication 14, ledit dispositif de commande étant destiné à modifier l'impédance de la ligne de transmission capacitive (1) en commutant l'impédance entre au moins trois états ; dans chaque état, ladite ligne de transmission capacitive (1) présentant une impédance différente de l'impédance de chacun des deux autres états et fonctionnant comme une ligne de transmission capacitive (1).

16. Système de gestion d'impédance selon la revendication 14 ou la revendication 15, lesdites une ou plusieurs charges (5) étant une pluralité de charges (5).

17. Procédé de modification d'une impédance d'une ligne de transmission capacitive (1) présentant une impédance, comprenant :
(a) la réception de données sur une ou plusieurs charges (5) connectées à la ligne de transmission capacitive (1) et/ou sur un système de transmission d'énergie (8, 20) dont la ligne de transmission capacitive (1) fait partie,
(b) la détermination d'une impédance cible de la ligne de transmission capacitive (1) sur la base des données,
(c) la comparaison de l'impédance à l'impédance cible, et
(d) la modification de l'impédance pour diminuer la différence entre l'impédance et l'impédance cible,
**caractérisé en ce que** l'impédance de la ligne de transmission capacitive (1) est modifiée en commutant l'impédance entre au moins deux états ; dans un premier état, ladite ligne de transmission capacitive (1) présentant une première impédance et fonctionnant comme une ligne de transmission capacitive (1), et dans un second état, ladite ligne de transmission capacitive (1) présentant une seconde impédance, différente de la première impédance, et fonctionnant comme une ligne de transmission capacitive (1).

18. Procédé de modification d'une impédance d'une ligne de transmission capacitive (1) selon la revendication 17, ladite impédance de la ligne de transmission capacitive (1) étant modifiée en commutant l'impédance entre au moins trois états ; dans chaque état, ladite ligne de transmission capacitive (1) présentant une impédance différente de l'impédance de chacun des deux autres états et fonctionnant comme une ligne de transmission capacitive (1).

19. Procédé de modification d'une impédance d'une ligne de transmission capacitive (1) selon la revendication 17 ou la revendication 18, ladite ligne de transmission capacitive (1) étant une ligne de transmission capacitive (1) selon l'une quelconque des revendications 9 à 13.

20. Station de charge sans fil destinée à un véhicule électrique comprenant un système de transmission d'énergie (8) selon l'une quelconque des revendications 1 à 8.

21. Parc de véhicules comprenant une station de charge sans fil selon la revendication 20.
